# EUROPEAN PATENT APPLICATION

(11) **EP 1 320 184 A2**
(43) Date of publication of application: **18.06.2003**
(21) Application number: 02027255.5
(22) Date of filing: 06.12.2002
(51) Int. Cl.: H02P 7/00

(54) **Linear electric motor controller and system for providing linear speed control**

(30) Priority: 13.12.2001 US 17231; 13.12.2001 US 17232; 29.03.2002 US 108707; 03.12.2002 US 307987
(71) Applicant: CARTER GROUP, INC., Windermere, Florida 34786 (US)
(72) Inventor: Ivankovic, Mladen, Burlington, Ontario L7L 1C4 (CA); Beaumont, Marcus, Burlington, Ontario L7R 3X5 (CA); Graterol, Jesus R., Oakville, Ontario L6M 4C6 (CA); LaCroix, Michael Charles, Hamilton, Ontario L8K 3E5 (CA); Wang, Hongyu, Toronto, M3H 4Y2 (CA)
(74) Representative: Holme, Edvard

(57) **Abstract**

The invention relates to a method and system for linear speed control for electric direct current motors, in which digital to analog converter circuitry is used for converting an 8-bit digital signal to an analog voltage for setting voltage across a motor, a digital state machine means is used for converting the duty cycle of an input signal for output to the digital to analog converter means, and a closed loop feedback means is used for monitoring and setting the voltage across the motor. An over-current sense circuit can be used for monitoring the current across or passing through the electric motor. An over/under voltage sense circuit can be used for monitoring voltage of the electric motor. The resulting 8-bit digital control signal is converted to an analog voltage for the electric motor. The topologies and circuits for short circuit protection, locked rotor protection, over temperature protection, standard electrostatic discharge protection as well as reversed polarity protection for direct current source can be used as different variants per needs of the applications in this invention. Such methods and systems find particular use in automotive applications.

## Description

### FIELD OF THE INVENTION

The invention relates to a method of, and system for, providing linear speed control of electric direct current (DC) motors. Specifically, the present invention is directed to methods and systems for linear control of variable speed electric motors.

### BACKGROUND OF THE INVENTION

Presently, electronic controllers are typically designed for 12 V or 24 V electrical systems such as those used in automotive applications. Electronic controllers in automobiles are typically attached to dashboards, seat bottoms, rear side of the passenger compartment, or the like by being screwed into designated place(s).

Present-day electric motors, such as those used in heating ventilating and air conditioning (HVAC) systems of automobiles, are controlled mainly using switch-mode technology, in which a fixed DC power supply is switched on and off with a predetermined switch frequency and pulse width modulated switch-on time as needed to control the motor speed. In the United States, the motor control technology has been implemented primarily by use of a resistive divider (*e*.*g*., blower resistor) or by the switch-mode pulse width modulation (PWM). A resistive divider operates by modulating the power provided to the electric motor by a constant or adjustable amount, resulting in a choppy or stepwise level of control.

PWM switch-mode works by modulating the timing of the lead and trail edges of the power signal provided to the electric motor. PWM results in a relatively inaccurate control of an electric motor, and may also introduce a choppy quality of control. Moreover, the switch frequencies of PWM switch-mode controllers often have impact on system's EMC requirements.

Other known techniques involve supplying analog variable direct current (DC) voltage for control of variable speed electric motors. These techniques have typically involved a low-pass filter to generate the DC voltage. One drawback of such techniques is that the use of a low-pass filter tends to introduce a stepwise/choppy quality to the control that is used for supplying the voltage to the motor due to the latency period of control loops. The choppiness is similar to that which was discussed above in connection with resistive dividers.

Alternatively, some use has been made in Europe of a type of linear motor controller with speed set-point inputs in PWM type controller, *e*.*g*., the linear current threshold motor controllers shown in U.S. Patent No.5,781,385 to Permuy issued on July 14, 1998 or the linear speed controller through motor r.p.m. feedback control shown in U.S. Patent No. 5,747,956 to Lamm issued May 5, 1998. A PWM set-point signal is used directly for driving the controller switch device through a low-pass filter. These systems tend to be characterized by an undesirably large latency period, *i*.*e*., the period between detection and correction of the desired motor speed.

A linear electric motor controller generally works by directly controlling the motor speed by setting the voltage feeding to the electric motor. The speed of the electric motor has a linear relationship with the voltage supplied to the motor, hence the term "linear."

The widespread use of linear controllers for control of present-day variable speed electric motors has been frustrated largely due to the large amount of heat generated by such controllers. The heat that is generated creates difficulty in sufficiently cooling such linear controllers, avoiding thermal melting and breakdown of the material enclosing linear controller units, and the need for placement of the controller within a cooling air stream, and the wide-spread use of such controllers in practical applications. For example, some linear controllers have required heat dissipation ratings of as high as 90-95 Watts. One technique for addressing the heat dissipation issue has involved designs in which the controller is remotely located from heat-sensitive structures. This design tends to increase the size of the controller module.

On the other hand, PWM-type switch-mode controllers require a heat dissipation rating of only 6 - 10 watts, which advantageously allows for the controller to be located adjacent to heat-sensitive components such as plastics. The housing of contemporary electric motor controller units, however, is typically made of standard injection-molded polypropylene plastics, which can handle close contact with 6-10 watts of heat dissipation as with a PWM-type switch-mode controller, but not the possible 90-95 watts involved with linear controllers. Thus, switch-mode or PWM-type switch-mode controllers tend to be highly desired for commercial production applications.

Another related aspect of electric DC motors is a locked rotor condition that sometimes occurs and which may cause damage to the motor and the controller due to smoke and fire. Different techniques have been used for detecting the locked rotor condition. For example, one direct method is to add a rotation sensor inside the motor, thereby detecting rotation activity. Other indirect methods are based on changes in the motor voltage, current and temperature due to a locked rotor condition.

It would be desirable to overcome the various problems and disadvantages of both the heat-issues of linear control systems and the crude control of PWM-type switch-mode controllers in the prior art to satisfy the design requirements for current electrical systems and to provide smaller, more efficient controllers, in particular for automotive systems.

### Linear Electric Motor Controller With Multiple Input Interfaces

Another drawback of known existing systems is related to fan speed selectors/controllers. The conventional fan speed selector typically used on an automobile is based on a resistor card, i.e., a blower resistor is equivalent to a power resistor pack. Most selectors comprise multiple stages (*e*.*g*., from 3 to 8 stages) of resistors and relays, and include a multi-position selector switch that allows the operator to set the speed of the fan motor to multiple speeds, *e*.*g*., low, medium and high. Such selectors provide only discrete control of the fan motor speed, and do not allow fine-tuning of the fan motor speed to ensure the maximum comfort of the passengers. Furthermore, since finer control of the motor speed requires a greater number of stages of resistors and relays, the cost of the conventional selector increases with the required degree of control of the fan motor speed. This is contrary to what is desired by automobile manufacturers which is to lower unit costs as much as possible.

In addition, the resistor card is exposed to the open air when installed inside the dashboard of an automobile. Consequently, it is subject to corrosion, which negatively impacts the life of the card. Because resistors are made mostly of ceramic materials, environmental heat and vibration of the automobile also negatively impact the life of the resistor card.

The replacement of a faulty fan speed selector can be very expensive. For example, although the resistor card may cost only a few tens of dollars, the labor costs to replace the unit can run into hundreds of dollars because the interior of the dashboard is not easily accessible. In addition, the automobile owner is likely to experience the inconvenience of lost time and transportation while service is performed.

Conventional resistor card-based fan motor speed selectors also lack configurability. Namely, a three-position selector cannot be configured to provide four levels of speed control. Thus, automobile manufacturers are required to maintain an inventory of resistor cards for the different gradations of desired control of motors. Automobile manufacturers are also required to maintain an inventory of resistor cards for each different fan motor model to be controlled. The maintenance of multiple inventories of fan speed selectors is a highly undesirable cost to automobile manufacturers.

Conventional resistor-card based fan motor speed selectors also do not maintain a constant motor speed during operation because of changes in ambient temperature or battery voltage.

Although automobile manufacturers have desired a configurable, low-cost fan speed selector that provides continuous (instead of discrete) control, a number of technical hurdles have stood in the way of achieving these objectives. Although fan motor speed selectors have been utilized since before the invention of the transistor in the early 1950s, it is only recently that compact, low-priced power switches, *e*.*g*., metal-oxide semiconductor field-effect transistors (MOSFETs), powerful enough to control the fan motor of an automobile have come on the market at a cost-effective price. However, cost-effectively integrating the associated signal processing capabilities compactly on a chip and maintaining the constant speed of the fan motor using the power switches have been problematic.

Therefore, there is also a need for a more reliable, configurable, continuously controlled, compact, low-cost and long-life fan speed selector/controller that maintains motor speed.

Another drawback of existing blower resistor systems is that fan speed selectors are not conveniently replaceable. Therefore, there is a need for a drop-in replacement fan speed selector that incorporates the characteristics above mentioned.

### Parallel FETs In Linear Mode For Reduced Thermal Impedance

Another drawback of known existing systems is related to parallel arrangement of FETs. It is known in the power electronics industry, particularly in automobile applications, to use FETs in a parallel arrangement in switching applications. For example, parallel FET arrangements are commonly used in power supplies and motor drivers to achieve superior current capability at a reduced cost. Parallel FETs are cost effective because, for example, two 100W FETs cost less than one 200W FET.

In switching applications, it is common to connect the gates, sources, and drains of two FETs in a parallel arrangement and achieve satisfactory current sharing through the two FETs when they both switch on an off at the same time. Simple circuitry, such as a resistor connected to the gates, is all that is needed to equalize the current shared between the two FETs.

In switching applications operating in linear mode, however, it is desirable to use two FETs in a parallel arrangement in order to reduce the thermal impedance of the entire switch. A typical FET has a thermal impedance of approximately 0.4 to 0.5 °C/W. In a 100W application, the temperature drop on the FET alone is about 50 °C. When other thermal impedances between the FET and the environment are taken into consideration, i.e., from the FET junction through the casing to the heat sink and finally to the ambient air, the overall thermal impedance is often too high, which causes the temperature of the switch to exceed the rated operating temperature range. Using two FETs instead of one reduces the thermal impedance of the entire switch by half, which enables the switch to remain in its operating temperature range. Reduced thermal impedance also allows for the possibility of reducing the size of external heat dissipators, such as a heat sink, thereby reducing the overall size of the switch.

The use of parallel FETs in linear operation presents technical challenges. For example, in conventional current-balancing schemes based on paralleling FETs, there often occurs a condition in which one of the FETs heats up more than the other due to differences in the FET characteristics arising from, for example, variability in surrounding circuitry as well as variations in the FET manufacturing process. Over the long-term, this uneven heating of the two FETs leads to the premature failure of one of the FETs.

Studies have shown that reducing the thermal impedance of a switch in half can reduce the mean-time-between-failure (MTBF) rate by as much as 20% to 30%. Since the typical automobile has an expected lifespan of around 7 to 10 years, the lifespan of automobile components such as switches is a particularly important consideration because the repair or replacement of an automobile component can incur high labor costs and can cause an inconvenience to the automobile owner.

Therefore, there is also a need for improved performance of switches operating in linear mode.

For example, there is a need to reduce the thermal impedance of the switch, to balance the current distribution between parallel FETs arranged in the switch, to avoid a thermal runaway condition in parallel FET switches, and to equalize the temperature of parallel FETs of a switch operating in linear mode.

In addition there is a need to increase the lifespan and the size of a switch.

### Protection Circuit Topology For Linear Power Module

Another drawback of known existing systems is related to LPM protection circuitry. During the installation or servicing of a conventional automobile HVAC system, it is possible for damage to occur to the LPM from a number of sources, including: 1) an inadvertent reversal of polarity from the circuit's design polarity, 2) circuit voltage overshooting spikes that are intrinsic to all motor-driven systems, and 3) voltage overshooting spikes caused by a slowdown or shutdown of the electric fan motor. Depending on their magnitude and duration, any of these conditions are likely to damage the LPM in a way that it would necessitate its replacement. The replacement cost of an LPM can reach several hundred dollars when parts and labor costs are considered. Automobile owners are also likely to experience the inconvenience of lost time and transportation while their vehicle is being serviced. In addition, damaged electrical components may pose a safety concern to automobile owners and service personnel.

Some methods for LPM protection are known in the industry. For example, U.S. Patent No. 5,519,557, entitled, "Power supply polarity reversal protection circuit," assigned to Chrysler Corporation, describes a power supply polarity reversal protection device that includes a voltage-controlled switching device, *e*.*g*., an N-channel metal-oxide semiconductor field-effect transistor (MOSFET), connected between the power supply output (*e*.*g*., a positive supply voltage) and the circuit to be powered by the supply, i.e., the load. A diode, preferably the parasitic diode inherent in the MOSFET between the drain and source, is arranged so that when the positive supply terminal is connected to the transistor, the diode is forward-biased and will allow a diode current to flow. A sensing means generates a control terminal voltage in response to the diode current flow. This control terminal voltage is applied to the switching means control gate and is sufficient to cause full conduction through the switching means. If, instead, a negative supply voltage is connected to the transistor, the diode will be reverse biased and no current will flow. Since there is no diode current, the sensing means will not generate a control terminal voltage and the switching means will not turn on, thus protecting the load.

However, the '557 patent does not provide protection to the power supply from voltage excursions caused by slowdown or shutdown of the load. Therefore, what is needed is a linear power module with reverse bias and voltage spike protection.

In addition, there is a need for a more reliable LPM circuit with a cost-effective solution for LPM protection. Moreover, there is a need to protect the LPM against voltage excursions and to provide a safer automobile HVAC system with a more reliable means of automobile HVAC system installation and servicing.

### Temp FET-Based Apparatus For Protection Against Locked Rotor In An HVAC System

Another drawback of known existing systems is related to locked rotor protection. Electric motors, particularly fan motors in automobile HVAC systems, often include mechanisms that terminate operation of the motor in response to thermal overload conditions that could result in permanent damage to the motor or associated equipment. A thermal overload, such as an excessively high winding or rotor temperature, may occur as a result of a locked rotor, a faulty bearing, a high mechanical load, a supply overvoltage, a high ambient temperature, or some combination of these conditions.

Overcoming the problem of a locked rotor condition in the fan motor of an HVAC system of an automobile has presented a number of challenges.

A locked rotor condition can cause an electric motor to draw many times its rated current. Therefore, one conventional approach for handling a locked rotor condition is to provide overcurrent protection function, either by means of an electronic overcurrent protection circuit or a current fuse. When the rotor of a motor becomes locked for some reason, the impedance of the motor circuit decreases, which causes the current to increase. The increased current is then detected by the overcurrent protection function, which cuts power to the motor, thereby protecting the motor and the controller from destruction.

Another conventional approach for protecting an electric motor against a locked rotor condition is the use of position sensors, *e.g*., optical sensors, rotating pulse sensors, and proximity sensors. However, position sensors are relatively large and increase the costs of the motor, the control circuitry, installation, and maintenance. Further, position sensors are not very reliable. For example, the environment of the motor of an HVAC system in an automobile can be quite severe, causing optical sensors to become dirty and causing proximity sensors to lose their magnetic properties.

Yet another conventional approach for protecting an electric motor against a locked rotor condition is the use of thermal cutouts. However, this approach is undesirable because thermal cut-outs typically include a complex arrangement of springs and contact elements that are mounted in a housing, which is inherently costly and does not allow for the direct inspection because thermal cut-outs are not usually visible through the motor housing.

Therefore, there is a need for a low cost, high-reliability, maintenance-free and long-lifespan locked rotor protection in an automobile HVAC system without the use of additional sensor components.

### SUMMARY OF THE INVENTION

In accordance with the principles of the present invention, an electric motor controller can be provided that can be both smaller and lighter in weight than a switch-mode controller of the prior art. This can help increase fuel economy, decrease vehicle size, or increase the space available within the vehicle for other uses, as well as combinations thereof, all of which are highly desirable achievements. The circuitry of the controller may be packaged into an integrated circuit to further reduce the weight and size of the controller. Different packaging arrangements may also be used.

The controller includes an internal feedback mechanism to minimize control and to monitor latency, which provides for a more accurate control of the electric motor speed. This mechanism optionally, but preferably, incorporates a digital conversion to generate the motor voltage, thereby allowing for even greater accuracy as compared to conventional low-pass filters.

Moreover, the present invention generally allows for high precision speed control at a resolution of less than 1% PWM duty cycle control signal, optimized thermal management, integrated circuits with higher energy conversion effectivity, higher power intensity, smaller footprint, and lighter weight, as well as the specially configured monitoring and protection system such as the sensorless locked rotor protection utilizing motor commutation pulses. In addition, the present invention provides for strengthened electrostatic discharge (ESD) protection (*e*.*g*., up to ±8kV contacted discharge and up to ±25kV air discharge), bulk current injection (BCI) protection for high frequency injection, over-temperature protection with hysteresis recovery, multi-level thresholds for over-current limit and short circuit protection, over/under voltage protection with hysteresis recovery, adjustable motor soft-start control, and reversed polarity protection for either the controller or DC motor power source such as a battery.

The linear motor controller can also include a suitable heat sink, capable of conducting heat from the controller, wherein the heat sink is made of a material and designed so as to maximize the dissipation of heat from the controller. This enables the controller to be located in closer proximity to plastic components and/or a plastic housing, which also then allows for the controller module to be designed smaller if desired. The controller housing and plastic components are designed to be more capable of withstanding the increased wattage of heat dissipated by the controller, thereby also allowing for the controller to be placed in closer proximity to the plastic components and/or housing, thereby also contributing to reduction in size of the controller module. Additionally, the placement of the controller is preferably optimized within a cooling airflow so as to facilitate heat dissipation from the controller through the heat sink.

The invention relates to an automotive electric motor linear speed controller that includes a digital to analog converter means for converting an 8 bit digital signal to analog voltage for setting voltage across the electric motor, a digital state machine means for converting the duty cycle of a speed control input signal (*e*.*g*., in approximately a 0,39% precision) for output to the digital to analog converter means, and a closed loop feedback means for monitoring and setting the voltage across the automotive motor. It is also advantageous to include an over-current sense circuit for monitoring the current across or passing through the electric motor, an over/under voltage sense circuit for monitoring a supply voltage to the electric controller, or both, although neither is strictly required.

Another embodiment of the invention relates to a circuit arrangement in a variable speed automotive electric motor controller. The circuit arrangement includes a controller logic circuit for operating a controller logic finite state machine, in which the state machine sets the voltage supplied to an electric motor. It can also include a closed loop feedback for generating a signal indicating the voltage across the electric motor, which can then be input to the state machine for monitoring thereof.

In another embodiment, the invention includes a system incorporating at least the above-described automotive electric motor linear speed control. In another embodiment, the invention includes a system for controlling the speed of an automotive electric motor, in which the voltage across the electric motor determines the speed of the electric motor. This system can include a digital to analog converter means for converting a digital signal to analog voltage for setting voltage across the electric motor, a microprocessor and associated digital memory for generating the digital signal, where the microprocessor is configured to instantiate and operate a digital state machine for converting the duty cycle of an input signal generated by an associated closed loop feedback means, and a closed loop feedback means for monitoring the voltage across the motor and generating a signal for input to the microprocessor. The invention also relates to an automobile including the above-described system. In a preferred embodiment, the system includes an operating temperature-control system.

In yet another embodiment, the system comprises a locked rotor protecting circuit for protecting the electric motor from locked rotor fault condition based on a commutating pulse noise signal obtained from said voltage across said motor. This embodiment also includes at least one multi-level current limiting circuit utilizing at least one current threshold for short circuit protection; a thermal sensing circuit for protecting the controller from over-heating damage; means for protecting the controller from damage by reversed polarity of a power supply; and means for protecting the controller from electrostatic discharge and bulk current injection damage.

Alternatively, the system can include means for detecting a locked rotor in the electric DC motor. A locked rotor signal is generated for immediate motor disconnection, therefore avoiding overheating of the system's elements, smoke and fire in case of a locked rotor. Preferably, the system detects when the rotor of the electric motor is locked without the need of rotation sensors. The commutation pulse noise across the motor is used to generate the locked rotor signal, i.e., the motor rotating status detection signal. The signal level and pulse frequency are adjustable and resettable depending on various motor configurations and motor speed requirements. Consequently, the rotation is detected directly thus avoiding false protection triggers or missed detections. The circuit and methods discussed herein neither affect nor interact with the current and voltage protections so it is unnecessary to take special considerations to a function such as detecting a locked rotor or other functions.

In another embodiment, the operating temperature of the key component of the controller is sensed by a PTC (Positive Temperature Coefficient) sensor and produced the thermal shut-off signal with automatic hysteresis recovery to DIN pin of the control IC.

There are two ways of implementing the sensorless locked rotor protection circuit. A discrete method utilizes commercial IC's and discrete components. An integrated method implements the configuration inside an ASIC. The integrated method is less expensive for mass production while the discrete method is more flexible, universal and immediate.

The invention also relates to a method of protecting an electric motor comprising a linear speed control generating a speed control signal. This method includes the steps of detecting a locked rotor condition of the electric motor; generating a locked rotor signal; disconnecting the electric motor based on the locked rotor signal; and restarting the electric motor through turning the speed control signal on and off. Additionally, the method can include the steps of sensing a locked rotor current; comparing the locked rotor current with a predetermined threshold; and limiting the locked rotor current based on the comparison. Preferably, the method includes the steps of sensing temperature of the locked rotor current sensitive components of the motor; and shutting down the motor based on the sensing of a temperature that indicates hysteresis recovery.

It is desirable to protect polarity sensitive components of the motor, and this can be achieved through the use of a diode. Alternatively, polarity sensitive components, such as one or more electrolytic capacitors, can be replaced with non-polarity components, such as one or more ceramic/film capacitors. Also, R-C-D network(s) can be implemented for electrostatic discharge and bulk current injection protection (*e*.*g*., for bi-directional electrostatic discharge and bulk current injection protection).

A system for protecting an electric motor comprising a linear speed control circuit generating a speed control signal is also provided. This system comprises means for detecting a locked rotor condition of the electric motor; means for generating a locked rotor signal; means for disconnecting the electric motor based on the locked rotor signal; and means for restarting the electric motor through turning on and off of the speed control signal. Advantageously, the system further comprises means for sensing a locked rotor current; means for comparing the locked rotor current with a predetermined threshold; and means for limiting the locked rotor current based on the comparison. Preferably, this system includes means for sensing temperature of the locked rotor current sensitive components of the motor; and means for shutting down the motor based on the temperature with hysteresis recovery.

Further embodiments of the invention relate to a system and method of detecting a locked rotor condition in an electric motor comprising a linear speed control generating a speed control signal. The method comprises the steps of: obtaining a signal consisting of pulses from the motor; filtering the signal thereby removing noise and amplifying the pulses; selecting pulses with an amplitude greater than a predetermined minimum amplitude; detecting whether the motor is moving based on the signal; and combining the signal with the speed control signal of the motor to obtain a locked rotor condition signal. The corresponding system comprises means for obtaining a signal consisting of pulses from the motor; means for filtering the signal thereby removing noise and amplifying the pulses; means for selecting pulses with an amplitude greater than a predetermined minimum amplitude; means for detecting whether the motor is moving based on the signal; and means for combining the signal with an ON/OFF signal of the motor to obtain a locked rotor condition signal.

In one preferred embodiment, the invention relates to a linear speed control for an automotive electric motor that includes a digital state machine for converting the duty cycle of an input signal generated by an associated closed loop feedback, an over-current sense circuit for monitoring the current across or through said electric motor, an over/under voltage sense circuit for monitoring a supply voltage to the electric controller, a digital to analog converter for converting an 8-bit digital signal to analog voltage for setting voltage across said electric motor, and a closed loop feedback for monitoring the voltage across said motor and generating a signal for input to said digital state machine.

The controller can also be packaged inside a controller module for ease of assembly into a final product, such as an automobile. Thus, the invention also relates to an electronic controller module including an electronic controller that generates at least about 15W of heat, an enclosure made of at least one heat-resistant material configured and dimensioned to substantially surround and physically protect the controller, at least one electrically-conductive member to provide input or output of at least one electrical signal through the enclosure to the controller, and a heat sink operatively associated with the controller to receive heat therefrom, the heat sink being configured and dimensioned to dissipate a sufficient amount of heat to inhibit or avoid damage to the controller and enclosure.

In one embodiment, the enclosure includes a lid, which comprises the heat sink. In a preferred embodiment, the lid is made of a heat-resistant material and the heat sink includes a heat fin assembly mounted upon the lid that extends away therefrom. A portion of the heat sink can extend through the lid to a position adjacent the controller to facilitate heat dissipation. In one embodiment, the heat sink is made of a material that dissipates about 20W to 150W. The heat sink material can include any suitable thermally conductive material, including aluminum, copper, thermally conductive plastic(s), or a combination thereof. The heat-resistant material does not melt on exposure to about 150W and typically includes an olefinic polymer, preferably one that includes amide units. In a preferred embodiment, the olefinic polymer includes a polyamide-polypropylene copolymer and includes a filler in an amount sufficient to increase the heat-resistance thereof. Preferably, the filler includes talc, glass, ceramic, mica, silicate, clay, aramid, lithopone, silicon carbide, diatomaceous earth, carbonates, metal or an alloy or oxide thereof, particulate carbonaceous material, hard particulate material, or combinations thereof. The filler can be present in any form, preferably whiskers, fibers, strands, or hollow or solid microspheres.

In a preferred embodiment, the electronic controller is a linear controller capable of facilitating temperature control in an environment. Preferably, the enclosure is at least substantially rectangular. For example, the enclosure can have dimensions of about 3 cm to 8 cm in length, about 1 cm to 4 cm in height, and about 3 cm to 6 cm in width. As another example, the heat sink includes at least two short fins having a length of about 0.25 cm to 1 cm and at least two long fins having a length of about 1.5 cm to 6 cm, each adjacent the enclosure at one end thereof and extending away therefrom. Preferably, the at least two long fins include a first heat fin having a length of about 1.75 cm to 2.25 cm and a second heat fin having a length of about 3.5 cm to 4.5 cm.

In one embodiment, the lid and the enclosure are operatively associated via a plurality of projections and gaps to permit the lid to securely snap into place against the enclosure so as to collectively completely surround the electrical controller. In a preferred embodiment, the module further includes an insulating member between the controller and the lid and in contact therewith to inhibit or avoid thermal degradation of the controller. Preferably, the insulating member can include at least one silicone material that is sufficiently flexible to at least partially conform to the controller. In another preferred embodiment, a thermal grout is included in the module and is disposed to facilitate the lid and the heat-resistant material being at least water-resistant.

In one preferred embodiment, the controller includes a single circuit board having all controller components mounted thereon that is surrounded by the enclosure and the lid.

The invention also relates to a method for dissipating heat from an electronic controller by providing an enclosure around the electronic controller which generates at least about 15W of heat during operation, associating a heat sink with the controller to receive heat therefrom, and dissipating a sufficient amount of heat to inhibit or avoid damage to the controller and enclosure. In one embodiment, the controller generates at least about 20W to 150W during operation. In another embodiment, at least about 90 percent of the heat generated is dissipated via the heat sink.

To further elaborate different aspects of the present invention, in some embodiments, a linear speed control method or system is provided for an automotive electric motor, that may include a digital state machine, for converting the duty cycle of a speed control input signal to digital signal in a 0.39% precision (*e*.*g*., approximately a 0.39% precision), comparing said input signal digitally with closed loop feedback of motor voltage signal, switching the operation states, counting the timeout and latching the control system at fault conditions.

### BRIEF DESCRIPTION OF DRAWINGS

The purpose and advantages of the present invention will be set forth in and apparent from the description that follows, as well as by practice of the invention. Additional advantages of the invention will be realized and attained by the methods and systems particularly pointed out in the written description and claims hereof, as well as from the appended drawings, wherein
Figure 1 is a block diagram of a linear controller integrated circuit in accordance with an embodiment of the present invention;
Figure 2 is a finite state machine diagram of controller logic used in an embodiment of the current invention;
Figure 3 is a block diagram depicting the pin-outs associated with the controller integrated circuit of an embodiment of the current invention;
Figure 4 is a top view of the module illustrating a heat fin and module according to an embodiment of the present invention;
Figure 5 is a perspective view of the top of the module and heat fins according to an embodiment of the present invention;
Figure 6 is a perspective view of the bottom of the module and electrical member(s) according to an embodiment of the present invention;
Figure 7 is a graph illustrating an example of a commutation noise during motor operation in accordance with one embodiment of the present invention;
Figure 8 is a graph illustrating an example of a low frequency commutation pulse during motor operation in accordance with one embodiment of the present invention;
Figure 9 is a graph illustrating an example of a high frequency noise floor commutation pulse during motor operation in accordance with one embodiment of the present invention;
Figure 10 is a flow diagram illustrating the sensorless locked rotor protection method according to an embodiment of the present invention;
Figure 11 is a flow diagram illustrating the locked rotor protection method with multi-thresholds of motor current in accordance with another embodiment of the present invention;
Figure 12 is a circuit illustrating one embodiment of the locked rotor protection circuit according to an embodiment of the present invention;
Figure 13 is a circuit element in the locked rotor protection circuit illustrating an electrostatic discharge and bulk current injection protection feature in accordance with another embodiment of the present invention;
Figure 14 is a conventional fan speed selector based on a blower resistor card according to an embodiment of the present invention;
Figure 15 is a linear electric motor controller with optional multiple hybrid inputs conversion interface according to an embodiment of the present invention;
Figure 16 is an optional input block of linear electric motor controller with multiple hybrid inputs conversion interface according to another embodiment of the present invention;
Figure 17 is a schematic drawing of a system comprising two temperature protected FETs operated in parallel in linear power mode having reduced thermal impedance according to an embodiment of the present invention;
Figure 18 is a schematic of a linear power module with reversed-bias protection circuit according to an embodiment of the present invention;
Figure 19 is a schematic drawing of a five-pin temperature protected FET-based apparatus for protection against a locked rotor condition in an HVAC system according to an embodiment of the present invention; and
Figure 20 is a schematic drawing of a three-pin temperature protected or fully protected FET-based apparatus for protection against a locked rotor condition in an HVAC system according to an embodiment of the present invention.

### DETAILED DESCRIPTION OF THE PREFERRED EMBODIMENTS

In accordance with a preferred embodiment of the invention, a method and system is provided to enable a linear electric motor controller that is smaller, lighter in weight, or both, compared to switch-mode controllers of the prior art. By packaging the linear controller of an embodiment of the current invention in an integrated circuit, additional weight and/or size savings can be realized. It has now been discovered that such linear controllers can be prepared by advantageously including an internal feedback mechanism to monitor the voltage and thus speed of the controlled motor, which can provide superior control compared to the switch mode type controller. The inclusion of at least one internal feedback mechanism facilitates a decreased latency between detection and correction of deviations in speed of the controlled electric motor. This can advantageously minimize control latency to facilitate more accurate control of the electric motor speed.

In one embodiment, an internal feedback that incorporates a digital conversion to generate the motor voltage can be used, thereby allowing for further increased accuracy and smoothness of control over the use of low-pass filters of the prior art.

It should be understood that the linear motor controller can be used or adapted for a variety of suitable applications, including control of electric motors, electric lights, and the like. In particular, the linear motor controller of the invention is specifically directed to its use in controlling electric motors in automotive systems, preferably automobile HVAC systems. Examples of linear motor controller systems and methods are illustratively shown in U.S. Patent Application No. 10/108,707, filed March 29, 2002, and U.S. Patent Application No. 10/017,232 filed December 13, 2001, which are hereby incorporated herein in their entirety by express reference thereto.

Preferably, the linear controller of the invention is disposed on a single circuit board having all controller components mounted thereon.

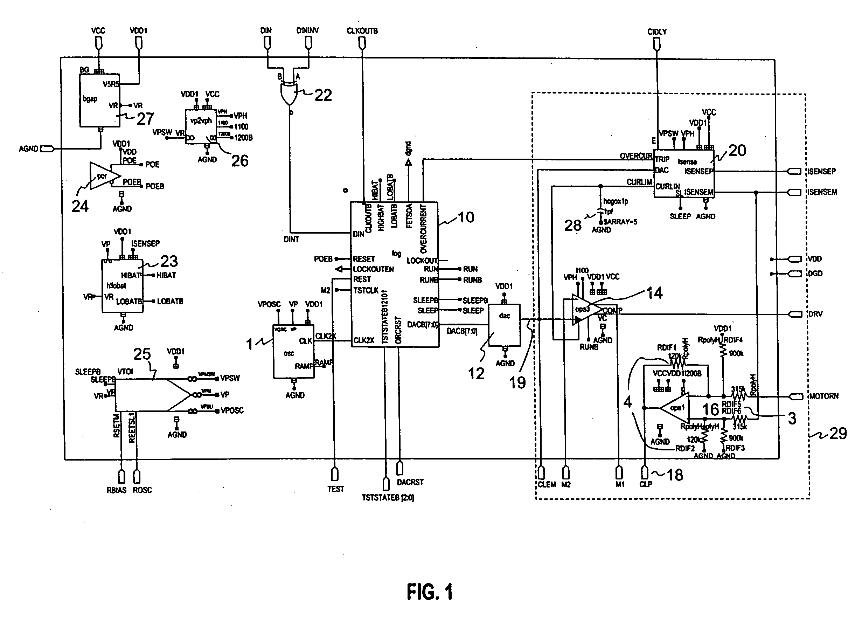

The integrated circuit block diagram of Figure 1 specified below serves to realize the linear power module and control method according to an embodiment of the invention. The oscillator OSC 1 generates the 50% duty cycle internal clock signal used by the digital logic block 10. The clock frequency of the oscillator is about 150 kHz +/- 10%. A digital state machine means is realized in the digital logic block 10 of the linear integrated circuit controller. Other methods employing similar state machines to that described herein may be used as is well known to those of ordinary skill in the art.

The closed loop feedback means may be embodied by operational amplifier OPA1 16, and operational amplifier OPA3 14, in conjunction with a compensation loop. OPA1 16 is used as a differential amplifier. It divides the input voltage by a constant value that is determined RDIF5/RDIF6 3 and resistors RDIF1/RDIF2 4. It defines the voltage across the motor - load CLP 18, which is then low pass filtered. The output of the low pass filter is then connected via a resistor to the input of the error amplifier OPA3 14. OPA3 14 serves as the error amplifier and gate driver. In the case of an over-current, the gate drive is altered to maintain a fixed load current. After a set period of time, the output of the gate driver is set to 0 volts.

The system transfer function CLP 18 may also be altered to allow for better matching to optimize performance of the monitor and control of the electric motor. The controller has the capability to operate with a ground offset of about +/- 2 volts. Also, the transfer function can be inverted if desired, and the slope and position of the transfer function can be modified within limits.

The closed loop feedback 29 circuit monitors the voltage directly across the electric motor. The voltage is fed back into the controller integrated circuit and compared to the reference voltage generated by the digital to analog converter, DAC block 12. Based on the difference, the loop changes the gate drive voltage using a field effect transistor (FET) controlling the voltage across the motor so as to eliminate the difference. This closed feedback loop makes it possible to keep the voltage across the motor constant under varying loads and supply voltages. It also functions with optimal speed and smoothness.

The digital-to-analog converter means for converting the 8-bit duty cycle information from the digital logic block 10 into an analog signal is provided by the DAC block 12 and associated circuitry. This circuit converts the 8-bit digital signal into voltage VO 19. It is this voltage that sets the reference that determines the voltage across the motor. The output of this circuit is coupled with a capacitor 28 to ground which provides low pass filtering and prevents the reference voltage from changing too quickly. This is important since the duty cycle is calculated on every cycle. The output of the DAC block 12 is VO 19 (100%-duty cycle).

The ISENSE block 20 forms a part of the compensation loop of the closed loop feedback means, and also functions as over-current and over/under-voltage circuits for monitoring the current and voltage supplied to the electric controller. It functions by limiting or shutting down the output current in the motor. In order to measure the current, the ISENSE block 20 measures the voltage across a shunt 1 mΩ resistor (part of ISENSE block 20). Thus, 1 mV is equivalent to 1 Amp. Other size resistors could be suitably substituted, with a corresponding change in voltage and current. The ISENSE block 20 compensates for the variation of the shunt copper resistor over a temperature range. The circuit is designed to provide a variable threshold of over-current. The actual value of the over-current threshold is determined by the speed control input signal. The lower the voltage across the motor, the lower the over-current threshold. The over-current threshold is broken down into 4 levels in the depicted embodiment.

The over/under voltage circuit compares the system voltage to preset references. One reference is for an over-voltage condition, the other reference is for an under-voltage condition. In either case, if the system voltage goes outside of the normal operation conditions, this circuit signals the state machine of the digital logic block 10 to turn the output off. The over/under voltage circuit has a small amount of hysteresis at each threshold to prevent unwanted oscillations.

The DIN block 22 takes the external pulse width modulated (PWM) speed control signal and level shifts it to a level compatible with the digital logic block 10.

The POR block 24 resets the digital logic block 10 if the VDD1 (input power) is below about 4.8V.

The VTOI block 25 and VP2VPH block 26 use accurate and stable voltage references to create accurate and stable current references.

The BGAP block 27 includes a bandgap reference and a regulator. They can provide internal temperature stable voltage references.

The HILOBAT block 23 senses the battery voltage and sends an over-voltage or an under-voltage conditional to the digital logic block 10, should the battery voltage be above approximately 17 volts or below approximately 8 volts, respectively.

In accordance with a preferred embodiment of the present invention, the system further detects a locked rotor condition of the electric motor without the need for rotation sensors. The detection is based on the commutation noise over the power feed lines of the motor. The system, in accordance with the present invention, generates a locked rotor signal to immediately disconnect the motor, therefore avoiding overheating of the system devices, smoke and fire. Consequently, there is no need for additional sensor in the motor for detecting rotation activity. Preferably, the system is fully resettable and reliable since the system detects rotation pulses and does not use indirect variables, such as temperature, voltage or current, for detecting the locked rotor condition.

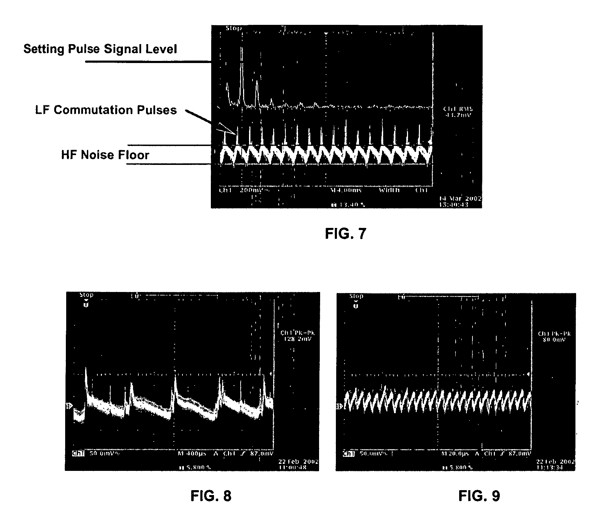

According to a preferred embodiment of the present invention, the sensorless locked rotor protection circuit can work based on the motor commutation noise signal. The motor noise signal includes two parts: high frequency (HF) noise floor and low frequency (LF) commutation pulses. The noise (pulses) is typically generated by the commutation between the poles and the brushes in a DC motor. The pulses are combined with a lot of electrical noise, and its frequency is directly related to the speed and number of poles and brushes of the motor. A typical commutation noise during operation of the motor is shown in Figure 7. The detailed noise features are shown in FIGS. 8 and 9. Preferably, the commutation pulse signal amplitude is higher than the noise floor level.

Typically, and as mentioned above, the pulse repetitive frequency of the commutation pulses depends on the motor's configuration, such as the numbers of poles, brushes, coils and the supply voltages, which tend to vary proportionally to the PWM duty-cycle signal.

In accordance with one embodiment of the present invention, the pulse frequency ranges from approximately 250Hz to 600Hz, while the PWM duty-cycle ranges from about 5% to 95%. Typically, the pulse signal level varies from several hundred milli-Volts at the highest speed down to less than about 100mV at the lowest speeds.

As described above, the commutation pulses in the motor circuit are used for obtaining the rotation sensing signal, which is produced during commutating between the brushes and the commutator (rotor-coils head) of the motor. Consequently, the brush DC motor is preferred for implementation of the locked rotor protection feature.

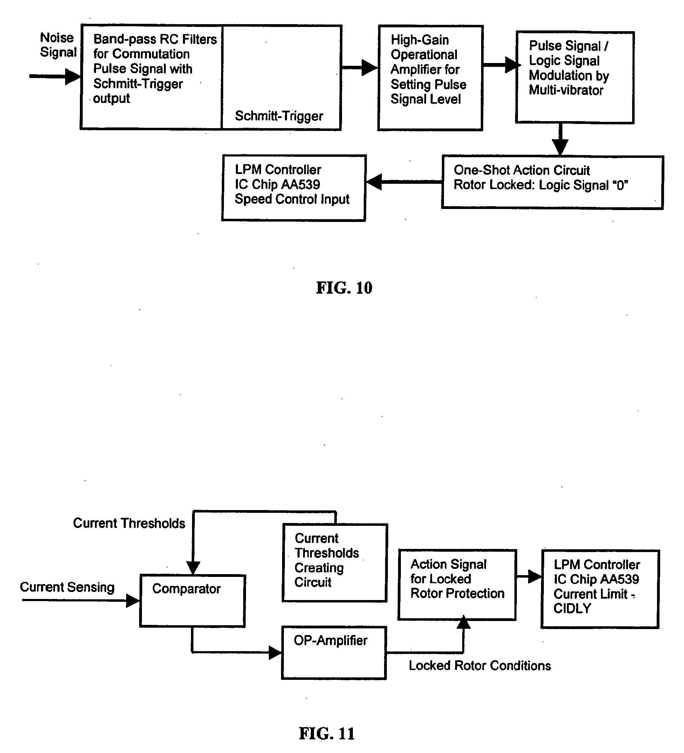

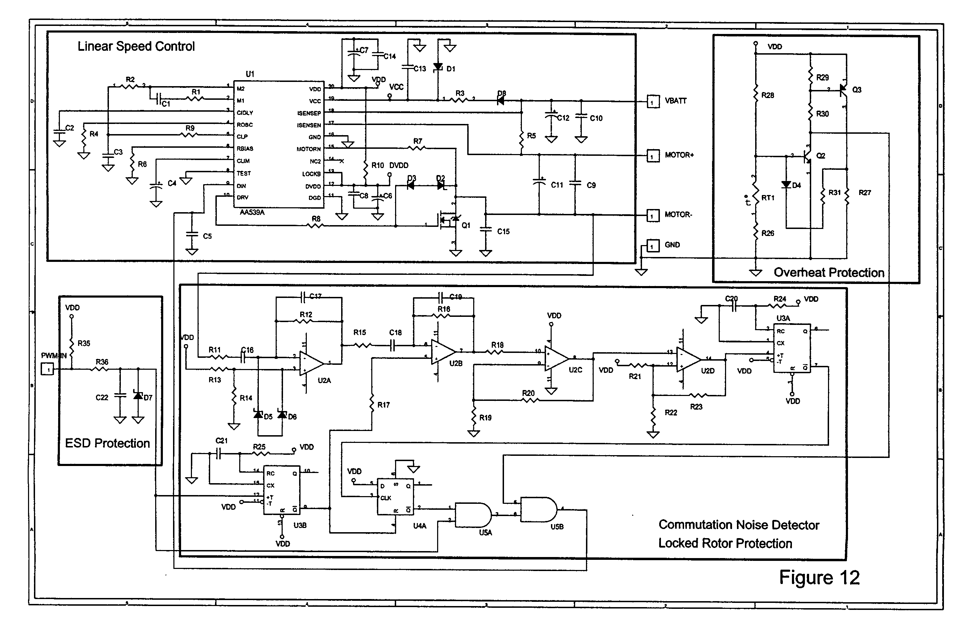

In accordance with one embodiment of the present invention a method of detecting a locked rotor condition in an electric motor is illustrated in Figure 10. Figure 12 illustrates one embodiment of the circuit capable of implementing the method.

The commutation pulse noise, which is a voltage signal across the motor during operation, is first sensed by a band-pass RC filter. The second order bandpass filter is utilized to obtain a useful signal from the motor terminals by removing undesired noise and amplifying the pulses to a more useful level. Referring to Figure 12, the steps of filtering and amplifying are performed by three stages of operational amplifiers. Accordingly, the HF noise floor is filtered out and the commutation pulse is selected with an amplitude greater than a predetermined pulse signal level (motor rotation sensing pulse) and sent to the next stage through the Schmitt-Trigger. The Schmitt-Trigger converts the pulse signal to a stable square waveform signal, thus conditioning the signal for the next stage. The signal is amplified in the second stage and then sent to the multi-vibrator. Preferably, the multi-vibrator used is a monostable, retriggerable, resettable multi-vibrator, which is commercially available and is well known in the art. The multi-vibrator modulates the commutating pulse signal to a logic signal, which is used as the rotating status detector of the motor, *i*.*e*., detects whether or not the rotor is moving ("ON-OFF" signal).

The logic signal can then be passed into a one-shot action circuit which is used to shut down the operation of the motor if the logic signal is "OFF". The locked rotor sensing signal, which is the output of the one-shot action circuit, is preferably combined with the PWM input signal to provide a PWM speed control signal which reports the motor locked rotor conditions. The output of the one-shot action circuit can thus function as an enable signal during controller's general operation.

Consequently, after the locked rotor protecting action has been taken, *e*.*g*., shutting down the motor, the LPM module can be restarted when the PWM speed control signal is turned off and then switched on again by the HVAC system.

According to a preferred embodiment of the present invention, the locked rotor protecting circuit can be integrated into an existing IC chip with addition of two or three pins for the adjustment of band-pass filter and the amplifier gain.

In accordance with another embodiment of the present invention, an alternative circuit topology may be applied to the locked rotor protection feature utilizing multi-thresholds of the motor current. A precision current shunt resistor or a current transformer may be applied to this topology. Figure 11 illustrates one embodiment of such a method. The motor current, including the locked rotor over-current, is sensed with a current shunt resistor or a current transformer. The sense signal is sent to a comparator and compared with a predetermined current threshold or with condition dependent current thresholds. Consequently, the output of the comparator is sent to the motor driving control circuit to limit the current or shutdown the LPM controller in accordance with the application requirements. The applicable number of the current thresholds could be 2^{N} (N = 0,1, 2, ..., n), depending on the operating conditions. Preferably, an embodiment of this method is integrated into the control chip.

Additionally, and in accordance with another embodiment of the present invention, a method of, and system for, protecting the electric motor based on a locked rotor fault condition can be provided through thermal shutdown with hysteresis recovery. When a locked rotor fault condition occurs, the linear electric motor controller and its motor could be damaged by a high locked rotor current producing overheat. As illustrated in Figure 12, a circuit with a positive temperature coefficient thermistor, (*e*.*g*., a "PTC thermal sensor" or "PTC temperature sensor"), also known as a thermal sensor, is implemented in the locked rotor protection circuit and identified as RT1 in Figure 12. PTCs, for example, are commercially available from Thermometrics of Edison, NJ. Preferably, the thermal sensor is coupled to the locked rotor current sensitive position(s), such as the areas closest to the switch component or I/O current traces. Preferably, the reaction time (warm-up time) of the selected sensor in the locked rotor protection circuit is short. The locked rotor protection circuit can be integrated within the existing IC chip with one additional pin for the PTC temperature sensor.

In accordance with another embodiment of the present invention, the locked rotor protecting circuit provides for a strengthened electrostatic discharge protection and bulk current injection protection for high frequency high energy injection.

In the application environment of a linear electric motor controller, the sensitivity classification of electrostatic discharge for packaging and handling ESD model (C=150pF, R=2kΩ) is shown in a table below.

| Type of Discharge | Indicated Voltage Level kV | Minimum Number of Discharges | Minimum delay between Discharges |
|---|---|---|---|
| Direct Discharge/ Contact Discharge | ±4 | 3 or 10 | 5 Seconds |
| | ±6 | | |
| | ±8 | | |
| Air Discharge | ±4 | 3 or 10 | |
| | ±8 | | |
| | ±15 | | |
| | ±25 | | |

Referring to the table above, the ESD protection is strengthened up to ±8kV contact discharge and up to ±25kV air discharge.

The immunity of the linear electric motor controller to radiated electromagnetic fields with bulk current injection can be classified per ISO 11452-4 and SAE J1113-4 standards as shown in a table below.

| Frequency Range MHz | BCI Level mA | Injection Probe Positions mm | Threshold |
|---|---|---|---|
| 1 ... 400 | 50 | 120 ± 5 450 ± 5 750 ± 5 | No deviation in linear controller's function (Function normally) |
| | 100 | | |

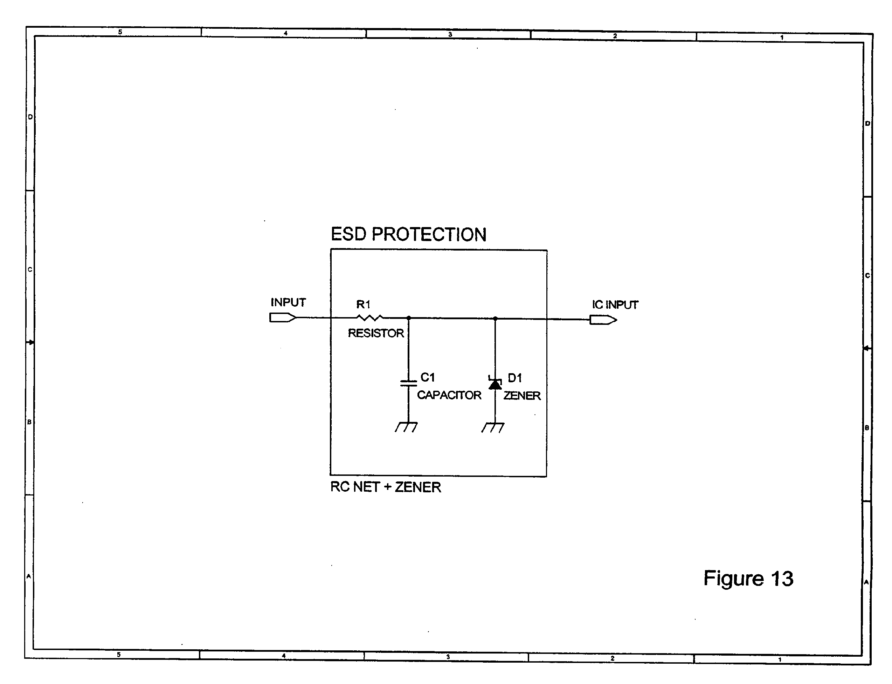

Optionally, a specially designed R-C-D network can be implemented in accordance with another embodiment of the present invention for the above mentioned ESD/BCI protection in the application environment. Figure 13 illustrates such a circuit. Consequently, the network allows the linear motor controller to withstand ESD up to ±8KV contact discharge and up to ±25KV air discharge as well as BCI up to 100mA in all injection probe positions without function deviation.

Preferably, the network is implemented as external circuitry outside the integrated IC chip AA539 in accordance with the invention.

Additionally, and in accordance with yet another embodiment, the present invention provides for protection of the controller from damage by reversed polarity of a power supply, such as a battery. The general criteria of engineering standard for the reversed battery polarity of the invention are about 1 to 2 minute(s) operating without any damage to the controller. In accordance with the preferred embodiment of the invention, the control circuit, including all of the polarity sensitive components is protected with a diode.

Alternatively, and in accordance with another embodiment of the invention the non-polarity components, such as ceramic/film capacitors, can replace the polarity sensitive components, such as electrolytic/tantalum capacitors. Preferably, the switch MOSFET is selected to be able to carry the reversed current with its body-diode for more than about 2 minutes when reversed battery polarity occurs.

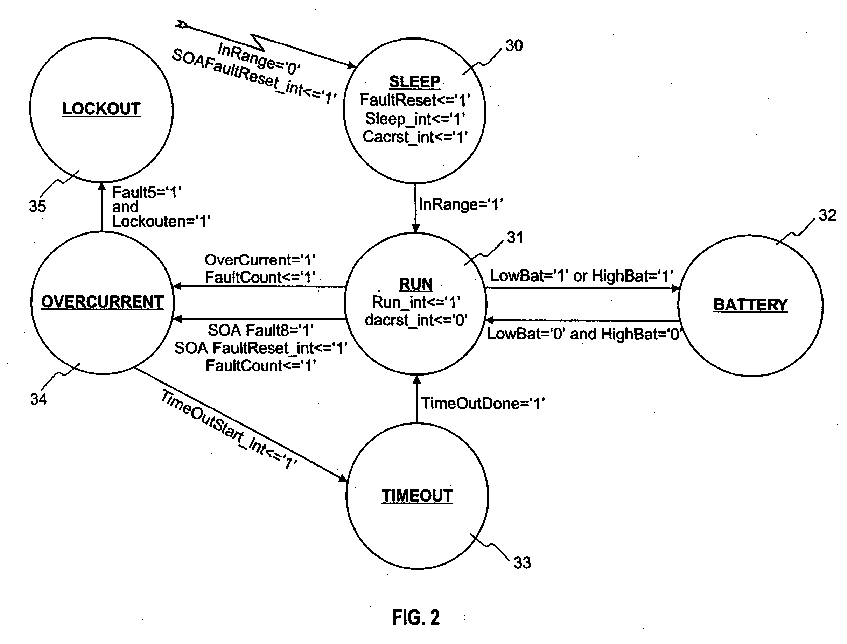

Figure 2 illustratively shows a finite state machine diagram for digital logic block 10. The finite state machine performs the function of converting the duty cycle of the input signal and determining the state of at least one linear power module. The duty cycle can be determined by comparing the value of one counter to another. The first counter typically keeps track of the time that the input signal is in a low condition. The second counter typically keeps track of the period of the input signal. Usually, the first counter is divided by the second counter once every cycle, and the result is an 8-bit value that can be passed on to the digital to analog converter. Since the counters are greater than 8-bits (16-bits), the linear motor controller can determine the duty cycle over a wide range of input frequencies.

The controller also optionally, but preferably includes guard bands at each end of the duty cycle scale. After the duty cycle is calculated, the result can be compared to see if it falls into either of the optional guard bands. If so, the state machine can command the output to be off if desired. The purpose of the guard bands, when present, is typically to cause the controller to enter a fail-safe mode when the input is shorted to a battery or to ground. This can facilitate protection of the sensitive and/or expensive electronic circuitry and prevent it from being damaged.

The state machine is also responsible for the control of the output when an over current situation is detected. When an over current situation is detected for longer than a predetermined time, the state machine can turn the output off for approximately one second, and then turn the output back on to the level that the input line is signaling. If the fault is still present, the controller can repeat the same re-try procedure. This can be arranged to continue until either the fault is removed or the unit is turned off by the operator to conduct diagnostics or repairs.

When the input signal indicates that the electric motor should be off, the state machine can put the controller into a sleep mode until a valid input signal is applied.

The state machine of a preferred embodiment has six states and has signal lines and logic which cause state changes. The precise states, signal lines, and logic describing the state transitions may vary in a given embodiment, as is understood in the art. The description of these items for a preferred embodiment is not intended to limit the invention, but rather to be exemplary in nature.

The state machine is typically instantiated and controlled by the controller integrated circuit, as the digital logic block 10 of Figure 1. As is well known in the art, the use of such an integrated circuit can also be accomplished by other means, including but not limited to the use of a general-purpose microprocessor and associated memory that are properly configured.

The signal lines used by the state machine include registers that contain either binary or other data. A binary signal line has a value of either a '0' or a '1.' A non-binary signal may contain any value that can be stored in the register. These signals have both a default value, which is used on power up, and a reset value, which is used upon a reset. The default and reset values are not always the same. In a preferred embodiment, the various signals and registers used to control the state machine and their power-on default and reset values are given in the following table.

**Table 1 -**

| State Machine Signals and Defaults | | |
|---|---|---|
| SIGNAL | DEFAULT | RESET |
| FaultCount | '0' | |
| FaultReset | '0' | |
| Lockout | '0' | '0' |
| Run | '0' | '0' |
| SOAFaultReset | '0' | '1' |
| Sleep | '0' | '1' |
| State | Current State | |
| TimeOutStart | '0' | '0' |
| dacrst | '0' | '0' |

"State" is a register value and is updated to contain the current state of the state machine, so no reset value is needed. FaultCount and FaultReset are used to track and signal a reset condition, so they have no given reset value.

The controller typically operates on any suitable duty cycle, such as from about 15 to 150 Hz. The applicable frequency of the speed control duty-cycle signal is limited by the rise/fall time of the signal pulse, the latency period of the state machine and the process/propagation time of the signal. Preferably, the duty cycle frequency can be about 35 Hz with a precision of about 0.4%. Generally, the resolution of the duty-cycle signal will be reduced when the signal frequency is out of range. The higher the frequency of duty cycle, the lower the resolution of control precision. The InRange signal is set to '1' if the duty cycle is from about 5% and 95%. The InRange signal is set to '0' if the duty cycle falls outside this range.

By default, the system powers on in SLEEP state 30, waiting for a valid PWM input. Whenever the controller receives a power on reset or an InRange = '0' condition, it returns back to the SLEEP state 30. Also, if the InRange line is '0' and the SOAFaultReset line is '0,' the state is set to the SLEEP state 30.

The SLEEP state 30 remains valid and current while the SOAFaultReset line is '0,' the Sleep line is '0,' and the cacrst line is '1.' If the InRange line is set to '1' while in the SLEEP state 30, the controller logic shifts to the RUN state 31. RUN state 31 is the normal mode of operation, and the controller logic will remain in this state so long as the Run interrupt signal line (run_int) is '0' and the dacrst interrupt signal line (dacrst_int) is '1,' so long as another state change is not caused by other signal lines. It is in the RUN state 31 that the state machine allows the controller circuits to control the output.

Should a battery problem occur, the Hilobat analog block the sets either the LowBat or HighBat line to '1'. If this occurs while in the RUN state 31, it will cause the controller logic to change to the BATTERY state 32. The HighBat and LowBat signal lines are latched. This helps to prevent false readings from transient events.

While in the BATTERY state 32, if both the LowBat and HighBat lines are shift again to '0,' the controller logic will change back to the RUN state 31. The LowBat signal line is set when a low battery condition is detected. An overcharged battery causes the HighBat signal line to be set. When a battery overcharge or undercharge condition is corrected, the relevant signal lines are reset, and the state is changed to RUN state 31. A potential oscillation can be prevented by the hysteresis in the Hilobat block.

Detection of an over current state causes the OverCurrent signal line to be set to '1' and changes the current state to OVERCURRENT state 34. The OverCurrent signal line is latched to prevent erroneous detection of the over-current condition. If the state machine is in OVERCURRENT state 34, and Fault 5 signal line is '1' (indicating that the over-current condition has occurred a predetermined maximum number of times), and the Lockout signal line is '1' (indicating that lockout is enabled), the state machine will change to the LOCKOUT state 35. While in the LOCKOUT state 35, the controller can be arranged so it will not operate unless the power is cycled or a reset is signaled.

While in the OVERCURRENT state 34, after a specified period of time, a timeout will be signaled via the TimeOutStart interrupt line. This causes the state machine to shift to the TIMEOUT state 33 until the timeout is complete, at which time the TimeOutDone signal line is set to '1' and the state machine returns the RUN state 31. The TIMEOUTCOUNTER block is used to create a delay of approximately 1 second after an over current problem is detected.

Thus, the digital state machine, over-current sense circuit, under/over voltage sense circuit, digital to analog converter, and closed loop feedback circuit, when optionally but preferably all used in combination, include functional blocks of a custom integrated circuit that performs the functions of the linear power controller module of the current invention. Of these, the functionality of the state machine, digital to analog converter, and closed loop feedback circuit are preferable embodiments of the current invention.

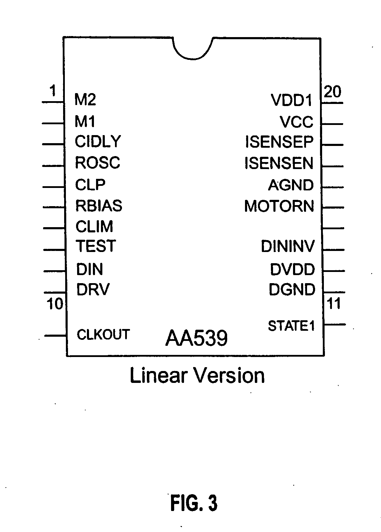

Figure 3 depicts the physical and logical arrangement of the pin-outs and associated analog circuitry of the controller integrated circuit of an embodiment of the current invention. The actual signals, pin-outs and physical packaging of a controller integrated circuit may, of course, be modified by methods well known to those of ordinary skill in the art. The signals and their associated pin numbers of the controller integrated circuit of the embodiment herein described are given for exemplary purposes as follows.

**Table 2 -**

| Pin assignments of the Motor Controller Integrated Circuit | | |
|---|---|---|
| SIGNAL | PIN | BRIEF DESCRIPTION |
| M2 | 1 | Input to the -ve input of OPA3. Connected to CLP as part of the closed loop feedback. |
| M1 | 2 | Connected to the output of OPA3 and is capacitively connected to M2 to provide stability and prevent oscillations. |
| CIDLY | 3 | Connected to a capacitor. Capacitor value determines the time delay before the circuit can detect an overcurrent state. Provides a time delay to prevent false triggering of the overcurrent detection circuitry. |
| ROSC | 4 | Connected to Ground through a resistor which sets the oscillator bias which determines the oscillator frequency. |
| CLP | 5 | The output of OPA1 18 defines the voltage across the motor and is low pass filtered. |
| RBIAS | 6 | Connected to GROUND through a resistor. the resistor value determines the BIAS current of the ASIC to ensure proper operation. |
| CLIM | 7 | Connected to GROUND through a capacitor. The value of the capacitor determines the "slew" rate regarding the change of the output voltage across the motor. |
| TEST | 8 | A special pin used by the manufacturer to test the integrated circuit. Left "Grounded" or unconnected in the circuit in normal use. |
| DIN | 9 | Input pin that the speed control duty cycle signal is applied to. |
| DRV | 10 | Output that supplies the appropriate voltage to the gate of the FET for a given voltage across the motor. |
| DGND | 11 | The GROUND connection for the digital circuitry on the ASIC. |
| DVDD | 12 | Connected to the 5 volt bus for the digital circuitry on the ASIC and provides a connection for a bypass capacitor to ensure proper operation. |
| DININV | 13 | Used to determine the polarity of the input signal. If connected to DVDD the polarity is positive, if connected to GROUND the polarity is negative. |
| MOTORN | 15 | Connected to the negative side of the motor. It is the input that is used to feedback the voltage across the motor to ensure the proper value of the voltage across the motor. |
| AGND | 16 | The GROUND connection for the analog circuitry inside the ASIC. |
| ISENSEN | 17 | Connected to the negative side of the shunt and used to monitor the current flowing through the load. |
| ISENSEP | 18 | Connected to the positive side of the shunt and used with ISENSEN to monitor the current flowing through the load. |
| VCC | 19 | Connected to the positive side of the voltage system through a resistor. This is the positive voltage connection of the ASIC. |
| VDD1 | 20 | Connected to the 5 Volt bus of the analog circuitry on the ASIC. Also provides a connection to a bypass capacitor to ensure proper operation. |
| Pin 14 is not connected. | | |

The linear electronic controller of the invention is typically packaged in a module to protect the circuitry during transport, assembly into a final end product, and use thereof. The module includes a casing to protect the circuitry and facilitate transport, assembly, and use, and includes a suitable heat sink to dissipate sufficient heat to inhibit or avoid degradation of the efficiency of the controller and the module itself. Preferably, the module casing, also referred to herein as the enclosure, includes materials designed to withstand the high temperatures generated by the linear controller. It is additionally advantageous to optimize the placement of the controller in an embodiment so as to facilitate heat dissipation. This is facilitated by placement of the controller in an air stream, such as an HVAC system in which it can be employed.

The present invention can provide one or more of the following benefits. The module of the invention including the linear electronic controller can be smaller than conventional automotive controller modules, which can advantageously permit placement of the module in a wider variety of locations. For example, HVAC electronic controllers can be disposed within the airflow in an increased number of locations between the intake vent(s) and the vent(s) to the passenger compartment.

The module of the invention is an enclosure that at least substantially surrounds the electronic controller, and in one preferred embodiment it is at least substantially rectangular. Preferably, the enclosure completely surrounds the controller except for any electrically conductive members or holes of less than 2 mm for additional cooling that exist therein. In one preferred embodiment, the enclosure includes a lid. In one more preferred embodiment, the lid is made of a heat-resistant material and the heat sink comprises a heat fin assembly mounted upon the lid that extends away therefrom. In another more preferred embodiment, the lid is the heat sink.

The lid and remainder of the enclosure are operatively associated to surround the controller circuitry. In one embodiment, this operative association includes a plurality of projections and recesses on the lid and remainder of the enclosure so they can snap together. The modules of the invention can typically be at least about 25%, preferably at least about 33% smaller than conventional electronic controller modules. In one preferred embodiment, the modules can be at least about 50% smaller than conventional modules. Conventional controller modules are typically at least 9 cm long x 4.75 cm across x 2 cm in height, not including any appendages for mounting or any heat fins attached thereto. Size can refer to either the footprint area or the volume, or both. A rectangular module typically has a length of about 3 cm to 12 cm, preferably about 4 cm to 8 cm. In one preferred embodiment, the length is about 4.5 cm to 7 cm, while in another preferred embodiment it is about 5 cm to 6.5 cm. The width of such a rectangular module can, in one embodiment, be from about 3 cm to 7 cm, preferably from about 3.5 cm to 5 cm, while the height can be from about 1 cm to 4 cm, preferably from about 1.5 cm to 2.5 cm. For example, the module can be 6 cm long x 4.75 cm across x 2 cm high, which is a 33% size reduction in footprint area compared to the conventional size module described above.

The modules are preferably sized sufficiently to increase the placement options thereof, particularly when used in airflow for HVAC control. For example, a conventional 9 cm long module has a certain number of places in which it can be disposed in the airflow of an HVAC system it is designed to control, but a 6 cm long module with otherwise identical size characteristics will have a greater number of suitable placement locations. Preferably, the modules of the invention are snapped into place in the desired system being electronically controlled, but they can alternatively or additionally use screws, clasps, brackets, nails, or any other suitable fastener to be secured. One desired location for HVAC electronic controllers is in the airflow being controlled. In particular, the modules can be disposed within 10 cm of the fan blades or motor used to move the airflow. The controller module can also have one or more tabs, or mounting areas, integrally formed therewith to use in facilitating mounting of the module for the desired end-use. These tabs can extend away from the module in any direction, but in one preferred embodiment, they extend away in the same direction as the length of the module.

The module of the invention is typically lighter weight than conventional modules due to improved electronic design, use of circuit boards, less material in the smaller modules, and the like. This can reduce repetitive motion injuries in assembly personnel. More importantly, this can reduce the overall weight of the automotive vehicle, thereby providing improved fuel efficiency. Such modules can have their weight reduced by at least about 10 weight percent, preferably by at least about 20 weight percent according to the invention. The modules of the invention produce less noise and heat than conventional controller packages, as well as providing increased durability. The improved design includes various features such as use of an integrated chip instead of various off-the-shelf components or even the footprint or volume size reduction of the module, which reduces weight both in the smaller circuit board and the smaller module casing.

Advantageously, the electronic controllers and modules of the invention can operate in various types of automotive electrical systems, including conventional systems and even 42 V systems. The controllers of the invention can be used in any suitable automotive application, including HVAC, motor control, lighting, or the like, or combinations thereof. In one preferred embodiment, the electronic controllers are blowout-resistant or blowout-proof, such that the electrical system has minimized or avoids damage when the car is jump-started improperly.

The module casing of the invention is typically an enclosure formed of a material, which in one preferred embodiment is non-conductive, that is sufficiently heat-resistant to inhibit or prevent melting thereof under normal operating conditions of the electronic controller therein. At least one electrically-conductive member is typically present to provide input or output of at least one electrical signal through the enclosure to the controller. The member can include a plurality of terminals, wire connections, or the like, or combinations thereof. Preferably, the enclosure is formed of a heat-resistant plastic that will not melt or lose structural integrity when the controller is operated in an 85°C atmosphere while dissipating at least about 15 W to 150 W. In one preferred embodiment, the module material is capable of withstanding operation at extremely low temperatures on the order of -40°C, as well. Testing showed that the modules of the invention survived at least 1000 cycles of normal operation at these temperature extremes. The heat-resistant plastic preferably includes an olefinic polymer, particularly one including amide units. Preferably, a polyamide-polypropylene copolymer blend is included in forming the enclosure. In a preferred embodiment, the polyamide includes nylon units or is entirely nylon. An exemplary module material includes a nylon-polypropylene blend.

More preferably, the enclosure of the module includes a mineral filler, such as talc, glass, mica, precipitated hydrated silica or other silicates, such as calcium silicates; clay; ceramic; aramid; lithopone; silicon carbide; diatomaceous earth; carbonates such as calcium carbonate and magnesium carbonate; metals such as titanium, tungsten, aluminum, bismuth, nickel, molybdenum, iron, copper, boron, cobalt, beryllium, zinc, and tin; metal alloys such as steel, brass, bronze, boron carbide, and tungsten carbide, metal oxides such as zinc oxide, iron oxide, aluminum oxide, titanium oxide, magnesium oxide, and zirconium oxide; particulate carbonaceous materials such as graphite, carbon black, and natural bitumen; fly ash; or a hard particulate material as noted below, or the like, or combinations thereof. Each filler may be included as noted above, or in the form of whiskers, fibers, strands, or hollow or solid microspheres, or the like, or in a combination thereof. Preferably, the filler includes talc, mica, or glass in some form. In one embodiment, fibers are preferred.

"Hard particulate materials," as defined herein, for optional use in the material of the invention include, but are not limited to: Actinolite; Aegirine; Akermanite; Almandine; Analcite; Anatase; Andalusite; Andesine; Andradite; Anorthite; Anorthoclase; Anthophyllite; Apatite; Arsenopyrite; Augelite; Augite; Axinite; Baddeleyite; Benitoite; Bertrandite; Beryl; Beryllonite; Bixbyite; Boracite; Braunite; Bravoite; Breithauptite; Brookite; Cancrinite; Cassiterite; Celsian; Chloritoid; Chondrodite; Chromite; Chrysoberyl; Clinozoisite; Cobaltite; Columbite; Cordierite; Cordundum; Cristobalite; Cummingtonite; Danburite; Datolite; Derbylite; Diamond; Diaspore; Diopside; Dioptase; Enstatite; Epidote; Euclasite; Eudialite; Euxenite; Fayalite; Fergussonite; Forsterite; Franklinite; Gahnite; Gehlenite; Geikielite; Glaucophane; Goethite; Grossularite; Hambergite; Hausmannite; Haüyne; Hendenbergite; Helvite; Hematite; Hemimorphite; Hercynite; Herderite; Hornblende; Humite; Hydrogrossularite; Ilmenite; Jadeite; Kaliophyllite; Kyanite; Lawsonite; Lazulite; Lazurite; Lepidocrocite; Leucite; Loellingite; Manganosite; Marcasite; Marialite; Meionite; Melilite; Mesolite; Microcline; Microlite; Monticellite; Nepheline; Niccolite; Nosean; Oligoclase; Olivine; Opal; Orthoclase; Orthopyroxene; Periclase; Pekovskite; Petalite; Phenakite; Piemontite; Pigeonite; Pollucite; Prehnite; Pseudobrookite; Psilomelane; Pumpellyite; Pyrite; Pyrochlore; Pyrolusite; Pyrope; Quartz; Rammelsbergite; Rhodonite; Rutile; Samarskite; Sapphirine; Scapolite; Silica; Sodalite; Sperrylite; Spessartite; Sphene; Spinel; Spodumene; Staurolite; Stibiotantalite; Tantalite; Tapiolite; Thomsonite; Thorianite (R); Topaz; Tourmaline; Tremolite; Tridymite; Ullmannite; Uraninite (R); Uvarovite; Vesuvianite; Wagernite; Willemite; Zircon; and Zoisite; and combinations thereof, as named in the table "Physical Constants of Minerals" from the *CRC HANDBOOK OF CHEMISTRY & PHYSICS, 52ND EDITION 1971-1972 (P. 193-197) THE CHEMICAL RUBBER CO., CLEVELAND, OHIO.*

The module preferably includes a nylon-polypropylene blend that is glass-filled, preferably with glass fibers. An exemplary glass-filled nylon-polypropylene blend used to form the module casing includes the GAPEX class of materials, commercially available from Ferro Corp. of Cleveland, Ohio.

The module includes a heat sink, which can be a heat fin portion attached to the module casing, a metal lid forming a portion or all of at least one side of the module casing, or both. Other suitable heat sinks may be envisioned and used. The heat sink typically includes a heat fin assembly mounted upon the lid that extends away therefrom. In one embodiment, a portion of the heat sink extends through the lid into the enclosure and adjacent the controller. When a heat fin is used, any suitable shape for dissipating the heat produced by the electronic controller of the invention can be used. The heat fin can be cast or extruded, for example, but in one embodiment it is preferably extruded. For example, an extruded heat fin having two protrusions spaced about 0.75 cm to 1.25 cm apart with one being about 3.5 to 4.5 cm long and the other being about 1.5 cm to 2.5 long can be used. Alternatively, a heat fin with an alternating pattern of 3 small fins and 2 long fins as noted above can be used. The small fins can have a height of about 0.25 cm to 0.75 cm. Without being bound by theory, it is believed that the extrusion of the fin provides an improved grain structure that provides for more desired thermal performance in connection with the invention.

Any sufficiently conductive material can be used for the heat sink or heat fin assembly so long as it can dissipate at least about 15 W to 150 W, preferably about 20 W to 100 W. Typically, the heat fin assembly on the module of the invention should be able to dissipate the about 85 W to 95 W that the electronic controllers disclosed herein typically produce, and any suitable material can be used. Preferred fin materials include, for example, aluminum, copper, thermally conductive plastics, and any combinations thereof. When a lid forming at least a portion of one or more sides of the module casing is used, it is preferred that a sufficiently thermally conductive lid be used that forms an entire side of the module casing. It is also preferred that the lid snaps or otherwise connects directly to the remaining module casing, which can be made of heat-resistant plastic. Again, aluminum, copper, and thermally conductive plastic(s), or combinations thereof, are among the preferred thermally conductive materials for the lid. Protective coatings can be applied if needed to inhibit or avoid oxidation, such as rust, or other forms of degradation typical in the environment in which the controller will be used.

The heat sink preferably does not directly contact the electronic controller circuitry, particularly the transistor component(s), since electrical contact therebetween would likely damage some or all of the circuitry. A gap therefore typically exists between the circuitry and the heat sink. It is preferred to use an electrically insulating and thermally conducting material between at least the transistor component of the circuitry and the heat sink. Preferably, the electrically insulating material is in contact with a portion of both the heat sink and the controller. While any suitable electrically insulating material can be used, including silicone grease, mica wafers, SIL-PAD glass-epoxy materials, and the like, it is preferred that the electrically insulating material includes one or more dry silicone-based materials, *i.e*., non-greases. Preferably, at least one filler material is included in the silicone-based materials, and any of the other fillers disclosed herein may be used for such purpose. In particular, the SARCON class of silicones commercially available from FUJIPOLY of Carteret, NJ are preferred. Exemplary SARCONs include GRI, GRM, and GRN, or combinations thereof. The insulating material can be used in sheet form, and is preferably pre-cut in the shape of small squares that can be pulled off a backing and placed in the module to thermally conduct the desired circuitry and heat sink. Preferably, the insulating material is soft and pliable so that it at least partially conforms to the shape of the adjacent circuitry and heat sink, particularly when the modular casing is closed to trap the insulating material therebetween. The electrically insulating, but thermally conductive, material typically has a thickness of about 0.25 mm to 5 mm, preferably of about 0.25 mm to 2 mm. In one preferred embodiment, the thickness is from about 0.5 to 1 mm.

It is critical that the module be at least water-resistant, and preferably waterproof, to avoid short circuits or other electrical problems or dangers when moisture is present in the airflow around the module or on nearby surfaces. For example, water from the air may condense on a nearby surface and drip onto the module. Thus, a water-resistant or waterproof seal is desired because any water that enters the module casing may compromise the electrical circuitry. When the heat sink is a heat-fin rather than a metal lid, a sealant is optionally, but preferably, used between the fin and heat-resistant plastic lid. The sealant preferably includes a thermal grout capable of providing sufficient sealing to inhibit or prevent the flow of water into the module casing. More preferably, the thermal grout includes one or more adhesives, such as a silicon adhesive. An exemplary silicon adhesive is a room temperature (RT) vulcanizing silicon adhesive (RTV).

In another embodiment, a mechanical fastener is optionally but preferably used to hold the lid tightly against the rest of the module, which has the desirable effect of pressing the flexible insulating material between the heat sink and the circuit board to prevent lateral slippage of the insulating material. For example, such mechanical fasteners include one or more clips, clamps, screws, bolts, nails, interlocking portions, or the like, or a combination thereof. Alternatively, one or more adhesives can be used in place of or in addition to one or more mechanical fasteners. In one preferred embodiment, the lid is held to the rest of the module casing with one or more screws.

In one embodiment, a plurality of terminals can be rammed into the module casing to provide electrical connections between the circuit board containing the electronic controller board inside the module and the plug or other wiring outside the module casing. Terminals so rammed into the module are optionally, but preferably, pasted to the circuit board with an electrically conductive paste. This can advantageously inhibit or avoid plastic waste, bent pins or terminals, and even the need for subsequent soldering of the terminals to the circuit board. In an exemplary embodiment, there are about 2 to 6 terminals and they extend through the module on a side opposite the heat sink. Preferably, the terminals and heat sink are each disposed facing in the same direction as the height of the module, which is typically the smallest dimension of the module when considering the only heat-resistant enclosure.

The invention also relates to methods of dissipating heat from electronic controllers, particularly the controller of the present invention. This is accomplished by providing an enclosure that is at least partially non-metallic around the electronic controller, which generates at least about 15 W of heat during operation and associating a heat sink with the controller to receive heat therefrom. The heat sink dissipates a sufficient amount of heat via the heat conducting heat sink to inhibit or avoid damage to the controller and the enclosure, particularly the non-metallic portions thereof. In one embodiment, at least about 90 percent of the heat generated is dissipated via the heat sink.

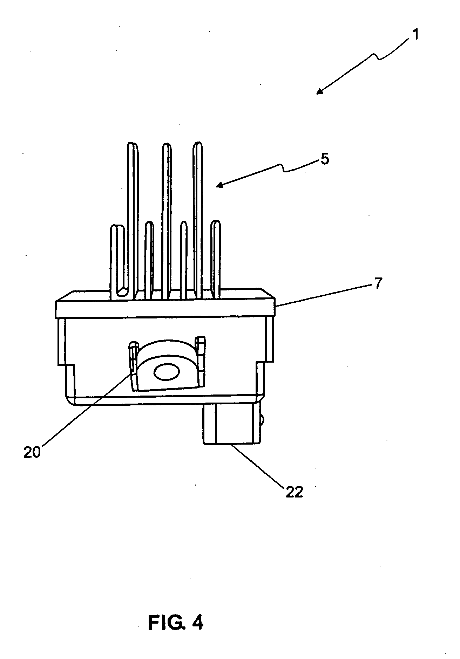

Figure 4 shows an embodiment of a heat sink in the form of heat fin 5 attached to lid 7 of module 1 according to the invention. In this embodiment, heat fin 5 is metallic and lid 7 is a heat-resistant material that can be the same or different as enclosure 10 of the module 1 adjacent the lid 7.

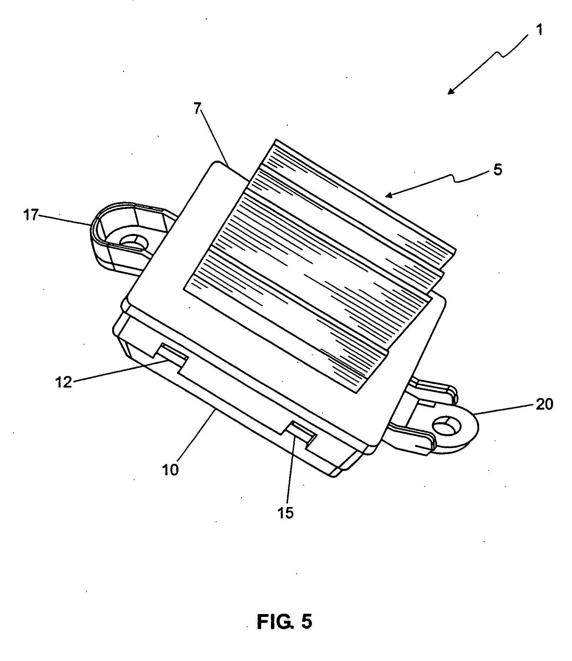

Figure 5 shows heat fin 5 attached to lid 7 of module 1 according to the invention. In this perspective, lid 7 is releasably secured to the remainder of enclosure 10 by a plurality of projections and recesses 12, 15. Also depicted in this embodiment are two projections 17, 20 integrally formed with the module that can be used to releasably or non-releasably fasten module 1 securely to a desired location, *e*.*g*., in an automobile system having a motor.

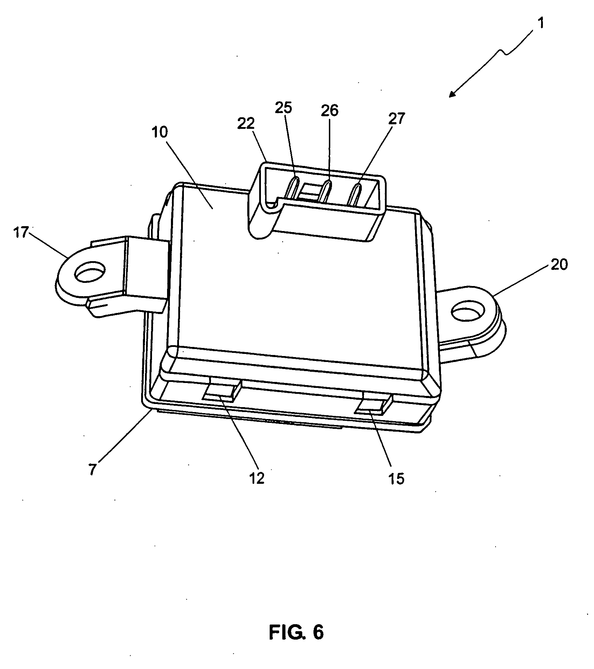

Figure 6 shows the bottom of module 1 containing the electronic controller (not shown) in one embodiment. Two projections 17, 20 are included for fastening module 1 to a desired location. The perspective view shows lid 7 attached to the remainder of enclosure 10 via the plurality of projections and recesses 12, 15. The bottom of module 1 also preferably contains a protective area 22 designed to protect an electrically conductive member 25, 26, 27 that permits information in the form of electronic signals to be transmitted between the electronic controller inside module 1 and external motors, sensors, power sources, and the like. The electrically conductive member depicted includes three terminals. In another embodiment (not shown), the electrically conductive member can include a pair of wires that are connected to the controller inside the enclosure 7, 10 and pass therethrough for connection to external electrical or other components as desired. Such wires can be in the form of a plug that can be readily connected to another component as desired to facilitate assembly of the module 1 when being installed in an end-use application.

In accordance with another embodiment of the present invention, a linear electric motor controller having multiple input interfaces is provided.

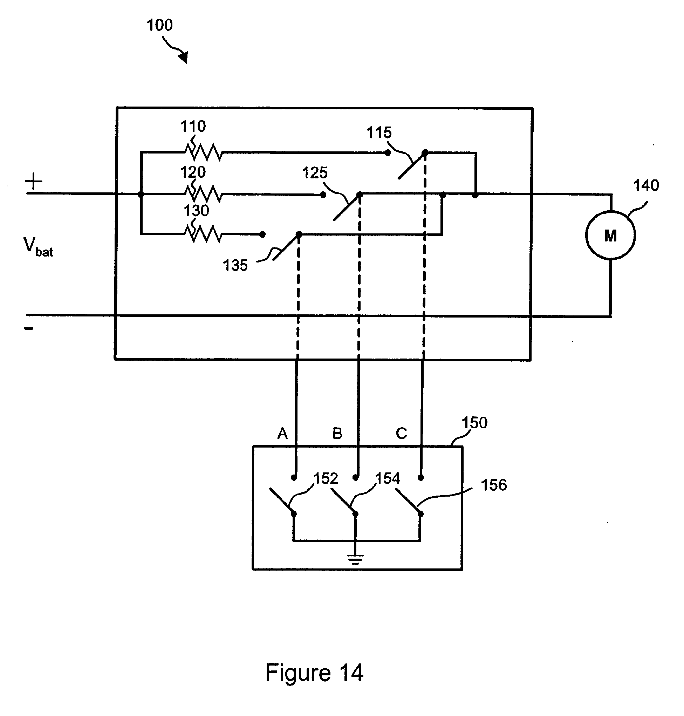

Figure 14 shows a system 100 that is representative of a typical conventional fan speed selector based on a blower resistor card that is used in an automobile.

System 100 comprises a series of resistors 110, 120, and 130; a series of relays 115, 125, and 135; a motor 140; and a selector switch 150, further including a series of switches 152, 154, and 156, arranged as shown in Figure 14. The resistance of resistor 110 is greater than the resistance of resistor 120, and the resistance of resistor 120 is greater than that of resistor 130. Switches 152, 154, and 156 correspond to the positions of fan speed selector switch 150, which is typically installed in the dashboard of the automobile.

When relay 115 is activated by the closing of switch 156, resistor 110 is placed in serial connection with motor 140; in this case, since resistor 110 has the greatest resistance of the three resistors 110, 120, and 130, motor 140 operates at low speed. Likewise, when relay 125 is activated by the closing of switch 154, resistor 120 is placed in serial connection with motor 140; in this case, since resistor 120 has a resistance between that of resistors 110 and 120, motor 140 operates at medium speed. Likewise, when relay 135 is activated by the closing of switch 152, resistor 130 is placed in serial connection with motor 140; in this case, since resistor 130 has the lowest resistance of the three resistors 110, 120, and 130, motor 140 operates at high speed. The three different speeds at which motor 140 operates depend on the resistance values of resistors 110, 120 and 130. Furthermore, selector switch 150 may also be constituted with a fourth switch and a fourth relay that connects power source V_{Bat} to motor 140 directly without any resistor in series, in which case motor 140 operates at its highest speed with fully rated power supply.

In addition, some arrangements of conventional fan speed selectors allow for the activation of more than one relay at a time, which makes possible the selection of motor speeds between the low, medium and high speeds. Such arrangements allow for finer control of the speed of the motor while maintaining compactness of the system by minimizing the number of relays and resistors. However, the fineness of control is still discrete rather than continuous. The arrangement of three stages of resistors, relays, and switch terminals shown in Figure 14 is depicted to represent a typical conventional fan speed selector system; however, conventional systems are not limited to three stages, and may contain fewer or greater than three stages. The choice of the number of stages is determined by the desired degree of control of motor 140, and by the allocated budget for the system. The cost of the system increases with the number of stages.

System 100 has a disadvantage in that it is not configurable. For example, a three-stage system cannot be re-configured to provide the functionality of a six-stage system. Instead, a different system must be provided, which requires automobile manufacturers to maintain an inventory of three-stage systems, four-stage systems, and so on. Furthermore, since resistors 110, 120, and 130 are fixed resistors, automobile manufacturers must also maintain an inventory of systems for different fan motor models, which is very costly.

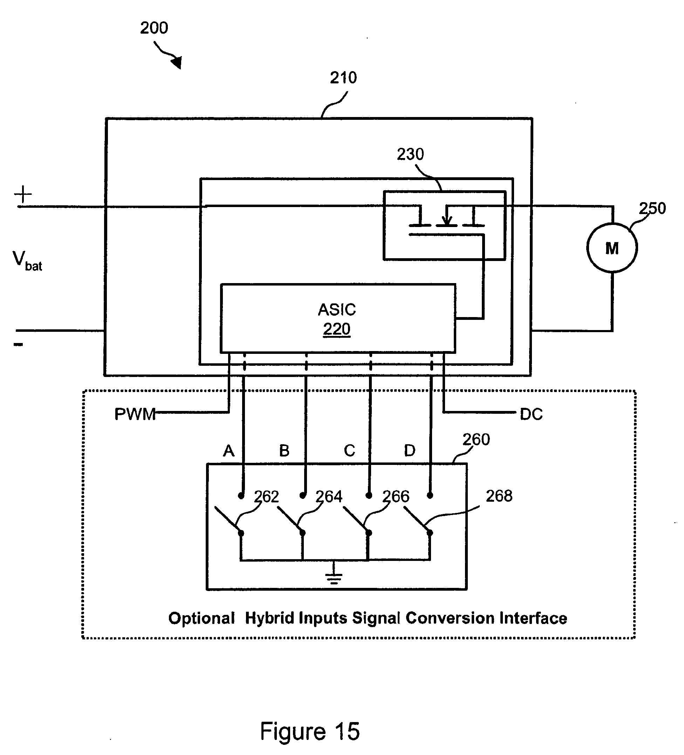

Figure 15 shows a block diagram of a linear electric motor controller system 200 of the present invention. System 200 comprises a controller 210 further having an application-specific integrated circuit (ASIC) 220 and a power MOSFET (Metallic Oxide Semiconductor Field Effect Transistor) 230. Controller 210 is connected to a power source V_{Bat} and a motor 250, for example, the motor of a HVAC system in an automobile, arranged as shown in Figure 15. ASIC 220 is connected to a four-stage selector switch 260, further having switches 262, 264, 266, and 268 that correspond to positions A, B, C and D on selector switch 260. ASIC 220 is a linear motor controller integrated circuit as described in U.S. Patent Application No. 10/017,232, filed December 13, 2001, by Carter Group Canada. As described in the '232 patent application, ASIC 220 provides linear control of the motor speed through the use of a voltage feedback loop across the motor connections. Thereby, even if the battery voltage varies due to environmental factors such as changes in ambient temperature or the operating condition changes of the motor load, the speed of the motor is maintained at a constant. Power MOSFET 230 works as a variable electronic resistor as well as an electronic switch in implementation.

Controller 210 emulates the function of a resistor card by controlling the voltage across motor 250 by means of power MOSFET 230 connected in series with motor 250.

In operation, when the operator selects position A of selector switch 260 by closing switch 262, ASIC 220 detects the grounding of the corresponding pin, and accordingly controls power MOSFET 230 to produce a predetermined first voltage that is supplied to motor 250. Thereby, the desired voltage is supplied to motor 250 so as to generate a first desired fan rotation speed. Thus, this operates as an equivalent to the first stage of a resistor card in a conventional fan speed selector.

Likewise, when the operator selects position B of selector switch 260 by closing switch 264, ASIC 220 detects the grounding of the corresponding pin, and accordingly controls power MOSFET 230 to produce a predetermined second voltage that is supplied to motor 250. Thereby, the desired voltage is supplied to motor 250 so as to generate a second desired fan rotation speed. Thus, this operates as an equivalent to the second stage of a resistor card in a conventional fan speed selector.

The same logic applies to the selection of positions C and D of selector switch 260. Furthermore, selector switch 260 shown in Figure 15 is not limited to four stages, and may have a fewer or greater number of stages.

ASIC 220 is further coupled to a setting input signal port for generating predetermined motor selection speeds. The input signal port may comprise a pulse-width modulation (PWM) motor speed setting signal line and/or a DC voltage speed setting signal line to enable either duty cycle pulse-width modulation control or DC analog voltage continuously variable control of motor 250 with predetermined input option, respectively.

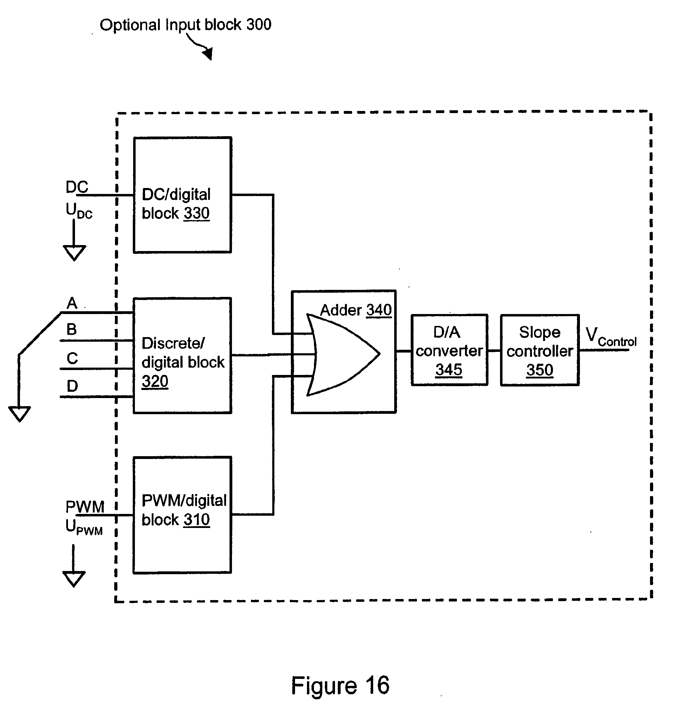

Figure 16 shows a schematic of an optional input block 300 of ASIC 220. Input block 300 comprises a PWM/digital conversion block 310, a discrete/digital conversion block 320, a DC/digital conversion block 330, an adder 340, a Digital/Analog converter 345, and a slope controller 350.

The function of adder 340 is to add the 8-bit digital signals applied to its inputs.

Slope control block 350 controls the rate of change of the voltage appearing at V_{Control}.

PWM/digital block 310 converts the input PWM control signal to an 8-bit digital signal. The output signal from PWM/digital block 310 is active when the duty cycle of the input signal is between 5% and 95%.

Discrete/digital block 320 processes the signals from the four positions (A, B, C, and D) of selector switch 260, which correspond to switches 262, 264, 266, and 268. For example, when switch position A is selected by closing switch 262, discrete/digital block 320 produces a first digital output signal. Likewise, when switch position B, C, or D is selected, a second, third, or fourth digital output signal, respectively, is produced. Discrete/digital block 320 is active only when one of switches 262, 264, 266, or 268 is closed, thus grounding one of the corresponding inputs A, B, C, or D to input block 300.

Grounding of switches 262, 264, 266, and 268 (A, B, C, D) corresponds to appropriate DC voltage values, *e*.*g*., 5 V, 3.75 V, 2.5 V, and 1.5 V, respectively. Further, discrete/digital block 320 converts each such voltage to an 8-bit digital value in binary system. For example, if 5 (Volt) is set as the highest value of the 8-bit digital description, it will be converted to the value of 11111111 in binary system, corresponding to the value of 255 in decimal system. Therefore, 5V is converted to 11111111B, 3.75V to 11000000B, 2.5V to 10000000B, and 1.5V to 01001101B.

Further, although Figure 16 depicts discrete/digital block 320 with four inputs, the present invention is not limited thereto, and discrete/digital block 320 may have fewer or greater than four inputs. Further, in a case where the number of positions on the selector switch is less than the number of inputs on discrete/digital block 320, some number of the inputs of discrete/digital block 320 may remain unconnected. In such a case, the lowest and highest ranking positions of the inputs of discrete digital block 320 are preferably used for the highest and lowest positions of the selector switch, and the remaining selector switch positions are preferably assigned as evenly as possible across the remaining inputs of discrete/digital block 320.

Discrete/digital block 320 enables system 200 of the present invention to serve as a drop-in replacement for conventional resistor card-based fan speed selectors in automobiles. The design of the circuitry of discrete/digital block 320 is well known in the art, and library modules are commercially available to incorporate such a block in an ASIC.

DC/digital block 330 has two functions: (1) to process the input signal from a control potentiometer, and (2) to generate an output voltage offset for transfer function. DC/digital block 330 converts the DC voltage to an 8-bit digital value, *e*.*g*., 5V is converted to 11111111B, similar to the conversion of block 320.

When DC/digital block 330 is used to process the input signal from a control potentiometer (not shown), the resistive value of an external potentiometer is measured, and the block 330 produces an output digital signal that is proportional (or inversely proportional) to the measured resistance. Thereby, motor 250 can be continuously controlled rather than discretely controlled. Further, DC/digital block 330 produces a digital output only when the U_{DC} is greater than 0.5 V.

When DC/digital block 330 is used to generate a transfer function, it outputs an offset digital signal based on the input signal, and that offset digital signal is combined, by adder 340, with the output from PWM/digital block 310 or the output from discrete/digital block 320. The input signal to DC/digital block 330 is determined by the specifications of the motor 250 to be controlled.

According to the above description, only one of PWM/digital block 310, discrete/digital block 320, and DC/digital block 330 operates at any one time. However, when DC/digital block 330 operates in offset mode, it operates in combination with either PWM/digital block 310 or discrete/digital block.

PWM/digital block 310 converts a duty cycle of 100% (high DC value) to an 8-bit digital value of 11111111B, and a duty cycle of 50% to 10000000B.

The output of adder 340 is a digital signal that is converted to an analog signal by D/A converter 345, which is then processed by slope controller 350 so that V_{Control} is appropriate for the particular motor 250 to be controlled.

Thereby, linear controller 210 is provided with the optional multiple inputs conversion interface.

Therefore, a reliable, configurable, compact, and low-cost linear electric motor controller for a vehicular HVAC system is provided. The controller features optional multiple input interfaces, specifically an interface for pulse width modulation control; an interface for discrete, stepwise control; and an interface for continuous variable control. The controller is implemented on an application-specific integrated circuit, and voltage to the electric motor is varied by a power MOSFET.

In accordance with another embodiment of the present invention, an arrangement of parallel FETs operating in linear mode is provided for reducing thermal impedance in a switch that controls the motor in the HVAC system of a vehicle such as an automobile.

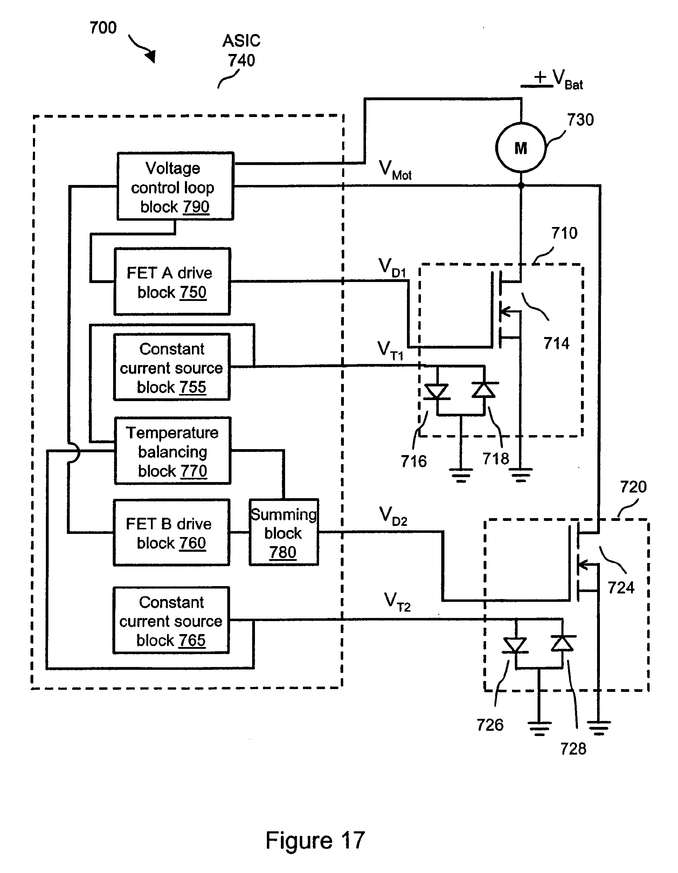

Figure 17 shows a schematic of system 700 of parallel temperature protected FETs in linear mode having reduced thermal impedance. System 700 comprises the first temperature protected FET 710, the second temperature protected FET 720, DC electric motor 730, and application-specific integrated circuit (ASIC) 740 that are arranged as shown.

Temperature protected FET 710 further includes FET 714, and a pair of build-in temperature sensor diodes 716 and 718. Temp FET 710 is a single integrated 5-pin component having diodes 716 and 718 disposed directly over the junction of FET 714, such that the temperature of diodes 716 and 718 is always essentially the same as that of FET 714. Furthermore, diodes 716 and 718 are temperature-sensitive diodes, i.e., the resistance of the diodes decreases as their temperature increases. For example, temperature protected FET 710 is typically rated 50 A at 60 V. An example of a commercially available temperature protected FET 710 is the IRLBD59N04E, manufactured by International Rectifier (El Segundo, CA).

Similarly, temperature protected FET 720 comprises FET 724, and diodes 726, 728 and has the same features and functions as FET 710.

Motor 730 is a direct current electric blower motor of a vehicular HVAC system.

ASIC 740 further includes FET A drive block 750, constant current source block 755, FET B drive block 760, constant current source block 765, temperature balancing block 770, summing block 780, and voltage control loop block 790.

The function of temperature balancing block 770 is to compare voltages V_{T1} with V_{T2}. Voltage V_{T1} from diodes 716 and 718 is proportional to the temperature of FET 714. Likewise, voltage V_{T2} from diodes 726 and 728 is proportional to the temperature of FET 724.

The function of constant current source blocks 755 and 765 is to supply diodes 716 and 718 and diodes 726 and 728, respectively, with a constant current of, for example, 250 µA, so as to sense a temperature related voltage across the diodes on a referable basis.

The function of voltage control loop block 790 is to compare voltage across motor 730 with V_{Control}, which is supplied by input block 300 as shown in Figure 16 and described above. If voltage across motor 730 is less than V_{Control}, then voltage control loop block 790 provides a reference voltage to FET drive blocks 750 and 760.

The function of FET drive blocks 750 and 760 is to drive FETs 714 and 724, respectively.

To ensure that both FETs operate at the same temperature in order to ensure an approximately equal lifespan, the function of temperature balancing block 770 is to compare voltages V_{T1} and V_{T2}, which are proportional to the temperatures of temp FETs 710 and 720, respectively. If V_{T2} is greater than V_{T1}, then temperature balancing block 770 outputs an offset signal. Temperature balancing block 770 preferably comprises a rail-to-rail operational amplifier.

In turn, summing block 780 offsets the drive voltage from FET drive block 760 to drive FET 724 based on the difference between V_{T1} and V_{T2}. Thus, the drive voltage to FET 724 is raised or lowered in order to keep the temperature of FET 724 the same as that of FET 714.

Thereby, the present invention ensures an equal lifespan of parallel FETs operating in linear mode for controlling the motor in a vehicular HVAC system, prevents thermal runaway, and reduces the thermal impedance of the switch by virtue of using two FETs instead of one.

In an alternative embodiment, more than two temperature protected FETs are arranged in parallel, each additional temperature protected FET having a corresponding FET drive block, constant current source block, and temperature balancing block in a similar arrangement as shown for temperature protected FET 720. In this embodiment, FET 720 and additional temperature protected FETs would have their drive voltages offset so that their temperatures track the temperature of temperature protected FET 710. The implementation of additional temperature protected FETs would provide the advantages of greater current capability with less/lower thermal impedance.

In yet another alternative embodiment, one of the two parallel FETs is a temperature protected FET and the other is a standard FET, and the objective is to equalize the current flowing through them and thereby achieve temperature protection for the entire switch. In this embodiment, the standard FET is slightly oversized, and the temperature protected FET is used to handle the power as well as to sense the temperature of the switch. Compared with the conventional approach of using two standard FETs, this embodiment reduces overall thermal impedance of the switch and also provides thermal protection of the switch at the same time. Since a temperature protected FET is twice the price of a standard FET, the present approach is also cost effective. However, this embodiment does not deal with the problem of thermal runaway.

Therefore, an arrangement of parallel temperature protected FETs operating in linear mode is provided for reduced thermal impedance in a switch for controlling the motor in the HVAC system of a vehicle such as an automobile. This arrangement has the benefit of reducing thermal impedance while ensuring a balanced current distribution flowing between the two FETs. Furthermore, since the temperature of each of the parallel temperature FETs is monitored, it is possible to fully load each FET with current in this arrangement. Further, since each temperature FET includes temperature-sensitive diodes proximate to the FET junction, the temperature of the junction can be measured more accurately than with an external sensor, which provides for better thermal protection.

In accordance with another embodiment of the present invention, a protection circuit topology for a linear power module is provided.

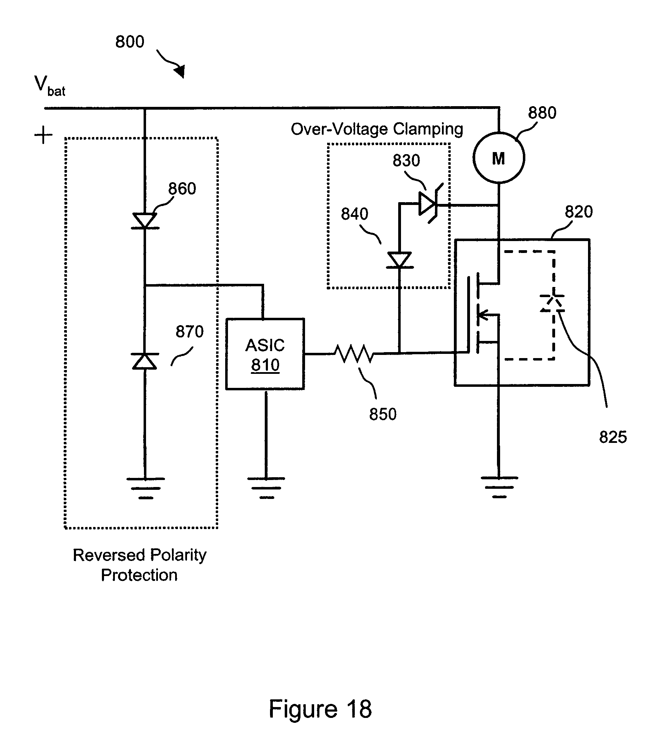

Figure 18 shows a schematic of LPM system 800 in accordance with one embodiment of the present invention. System 800 comprises application-specific integrated circuit (ASIC) 810 and power MOSFET 820 with its parasitic body diode 825. System 800 also comprises zener diode 830, diode 840, resistor 850, diode 860, and diode 870. In reality, diode 870 is an integrated component of ASIC 810 but is illustrated as a separate element for the purposes of clarity. System 800 also includes a power source V_{bat} and electric motor 880, for example the motor of a HVAC system in an automobile, arranged as shown in Figure 18. ASIC 810 is a linear motor controller integrated circuit as described in U.S. Patent Application No. 10/017,232, filed December 13, 2001, by Carter Group Canada. As described in the '232 patent, ASIC 810 provides linear control of the motor speed through the use of a voltage feedback loop across the motor connections. Power MOSFET 820 is capable of handling, for example, 60 A and 50 V.

When the polarity of V_{bat} is reversed from its design polarity, diode 860 and diode 870 prevent wrong current flow to ASIC 810 by obstructing and restricting current flow to ASIC 810, thereby protecting ASIC 810 from damage. Simultaneously, parasitic body diode 825 conducts the opposite current while motor 880 operates in the direction opposite of its design direction. Based on the nominal V_{bat} of 9 V to 16 V, the reverse polarity condition produces a motor current of 5-6 amps and a parasitic body diode 825 voltage of less than one volt. This serves to protect power MOSFET 820 from damage by limiting the power dissipation to well under the power MOSFET 820 power limit of 100 watts. Because of this low power dissipation level, power MOSFET 820 is able to sustain the reverse polarity condition for an unlimited time without damage.

Parasitic body diode 825 is not an actual diode but indicates the diode-like behavior of power MOSFET 820 when system 800 is in reverse polarity mode. Under the condition of design polarity, parasitic body diode 825 is arranged such that it is forward-biased and allows current to flow through power MOSFET 820. Because parasitic body diode 825 is not an actual diode, its performance characteristics are not explicitly specified, though its typical performance characteristics are approximately 0.8 volts and 15-20 amps when operating with a 60-70 amp device (approximately one-third of the nominal current of system 800). The behavior of parasitic body diode 825 is evident only when system 800 operates in a reverse polarity state.

When current is reduced to motor 880 in cases of motor slowdown and shutdown, a large voltage spike (up to 200 volts) may result from the natural inductance of the windings in motor 880. Smaller voltage overshooting spikes within the circuit may also occur due simply to the inductive nature of the motor-driven system. A voltage spike in system 800 results in current traveling through zener diode 830, diode 840, and resistor 850, thus switching on power MOSFET 820. Resistor 850 limits the current through zener diode 830 and diode 840, and zener diode 830 acts as a voltage Clamper. Because power MOSFET 820 is switched on, and the breakdown voltage of zener diode 830 is less than the breakdown voltage of power MOSFET 820, power MOSFET 820 is able to absorb the energy from motor 880 without damage.

Therefore, a reliable and cost-effective linear power module protection circuit for a vehicular HVAC system is provided. The circuit utilizes a state-of-the-art ASIC controller module, a power MOSFET, and several diode networks to eliminate potential damage to the circuit during a reverse polarity or voltage overshooting spike conditions. The circuit also provides over-voltage protection to the power MOSFET during voltage excursions caused by any transient processes of electric motor during slowdown and shutdown. The circuit is implemented on an application-specific integrated circuit, and power is provided to the electric motor through switching of the power MOSFET.

In accordance with another embodiment of the present invention, a temperature protected FET-based apparatus is provided for protection against a locked rotor condition in an HVAC system.

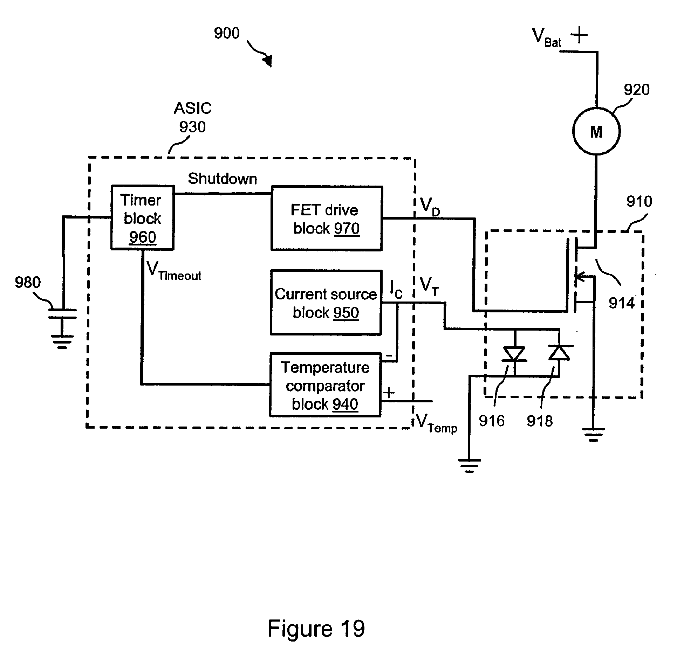

Figure 19 shows first embodiment of a system 900 of the present invention based on a 5-pin temperature protected FET. System 900 comprises temperature protected FET 910, DC electric motor 920, and application-specific integrated circuit (ASIC) 930, arranged as shown. Temperature protected FET 910 further comprises a FET 914, diode 916, and diode 918. ASIC 930 further comprises temperature comparator block 940, current source block 950, timer block 960, capacitor 980, and FET drive block 970.

Temperature protected FET 910 is a single integrated 5-pin component having diodes 916 and 918 disposed directly over the junction of FET 914, such that the temperature of diodes 916 and 918 is always essentially the same as that of FET 914. Furthermore, diodes 916 and 918 are temperature-sensitive diodes, i.e., the resistance of the diodes decreases as their temperature increases. Temperature protected FET 910 is typically rated for 50 A at 60 V. An example of a commercially available temperature protected FET is the IRLBD59N04E, manufactured by International Rectifier (El Segundo, CA).

The function of FET drive block 970 is to drive FET 914 in response to inputs from other control logic either internal or external to ASIC 930.

The function of temperature comparator block 940 is to compare voltages V_{T} with V_{Temp}. Voltage V_{T} from diodes 916 and 918 is proportional to the temperature of FET 914. Voltage V_{Temp} is a reference voltage generated by a divider circuit (not shown) generally external to ASIC 930, and is set to a value corresponding to the maximum permissible temperature of temperature protected FET 910. The actual value of V_{Temp} depends upon the particular characteristics of FET 910 and the parameters of diodes 916 and 918. In one embodiment of the present invention, V_{Temp} is set to a range of approximately 0.4 to 0.5 V.

Diodes 916 and 918 in temperature protected FET 910 are supplied with a constant current source I_{C} (*e*.*g*., 250 µA) by constant current source block 950 to sense the temperature related voltage across the diodes. In the event that motor 920 enters a locked rotor condition, the failure of the fan will stop the supply of cool air to FET 910, causing an over-temperature condition in FET 910, which occurs regardless of whether an overcurrent condition exists. Since diodes 916 and 918 in FET 910 are supplied with a constant current source I_{C}, the voltage V_{T} across diodes 916 and 918 decreases as the temperature of diodes 916 and 918 rises and their resistance decreases. This drop in voltage triggers temperature comparator block 940 when the voltage V_{T} falls below V_{Temp}, which in turn triggers timer block 960.

The function of timer block 960 is to output a shutdown signal when V_{Timeout} is triggered. The length of time that the shutdown signal is output is set by capacitor 980, generally external to the ASIC 930, which is connected to the timer 960. The timer 960 can typically be set in a range from 1 to 20 seconds, but is not limited thereto. For purposes of explaining the present invention, the timer is assumed to be set to a value of 10 seconds.

When timer block 960 is triggered by the triggering of temperature comparator block 940, timer block 960 outputs a shutdown signal to FET drive block 970 for 10 seconds, which turns off FET 914 for 10 seconds by setting V_{D} low, which in turn shuts off motor 920 for 10 seconds. After 10 seconds have passed, timer block 960 again examines V_{Timeout} from temperature comparator block 940. If V_{Timeout} is still high because it is being triggered by temperature comparator block 940 due to the continuing over-temperature condition of temperature protected FET 910, timer block 960 continues to output a shutdown signal to FET drive block 970, keeping FET 914 and motor 920 off for another 10 seconds. If V_{Timeout} has gone low, timer block 960 ceases outputting the shutdown signal to FET drive block 970, which then drives FET 914 to operate motor 920. If temperature protected FET 910 overheats again, the above process is repeated. Occasionally, the repetitive process of shutting down and starting up motor 920 may have the beneficial effect of enabling motor 920 to extricate itself from its locked rotor condition, for example by ejecting a foreign object that may have become jammed in the rotor.

In one embodiment of the present invention, timer block 960 includes a function that counts the number of attempts made to stop and start motor 920 once V_{Timeout} has gone high and, after a specified number of attempts, permanently outputs a shutdown signal to FET drive block 970 and permanently turns off FET 914 and motor 920.

An advantage of system 900 based on a 5-pin FET is that it is amenable to application in a parallel FET arrangement of system 700 as shown in Figure 17, which allows current sharing.

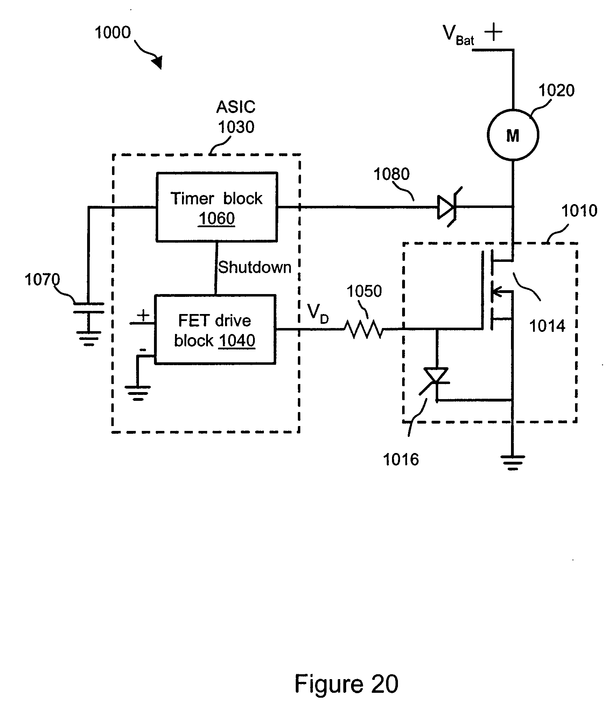

Figure 20 shows an alternative embodiment of a system 1000 of the present invention based on a 3-pin temperature protected FET. System 1000 comprises temperature protected FET 1010, electric motor 1020, ASIC 1030, resistor 1050, capacitor 1070, and zener diode 1080, which are arranged as shown. Temperature protected FET 1010 further includes FET 1014 and thyristor 1016. ASIC 1030 further comprises FET drive block 1040 and timer block 1060.

In operation, thyristor 1016 automatically shuts down FET 1014 when an over-temperature condition arises by shorting the gate of FET 1014 to the source of FET 1014, thereby stopping operation of motor 1020. FET 1014 remains shut down until the temperature falls below the cutoff temperature, at which point thyristor 1016 stops shorting the gate to the source, thereby starting operation of FET 1014 and motor 1020 again. Typically, the cutoff temperature is about 170° C. Resistor 1050 limits the current through the thyristor, thereby protecting the thyristor 1016.

However, there are some 3-pin temperature protected FETs on the market that are configured so that, once an over-temperature condition arises, FET 1014 remains off permanently until a power reset. System 1000 overcomes this disadvantage as follows. When the temperature of temperature protected FET 1010 rises above the cutoff temperature and thyristor 1016 shuts down FET 1014 and motor 1020, the shutting down of motor 1020 induces a voltage spike at the drain of FET 1014, which causes zener diode 1080 to conduct. In turn, timer block 1060 triggers a shutdown signal to FET drive block 1040 for 10 seconds, which turns the drive signal V_{D} to FET 1010 off for 10 seconds. Driving V_{D} to zero resets thyristor 1016 so that FET 1014 and motor 1020 can be started up again in 10 seconds.

Zener diode 1080 is specified so that it does not break down under normal operation of motor 1020. A typical breakdown voltage for zener diode 1080 is 25 V.

One of the advantages of the present embodiment is that 3-pin temperature protected FETs are less-expensive than 5-pin temperature protected FETs.

Therefore, a temperature protected FET-based apparatus for protection against a locked rotor condition in an HVAC system is provided. The apparatus comprises a temperature protected FET, an electric motor, and an ASIC having a temperature comparator block, a current source block, a timer block, a capacitor, and a FET drive block. When an over-temperature condition arises in the temperature protected FET, the temperature comparator block triggers the timer block to send a shutdown signal for 10 seconds to the FET drive block, after which the timer block ends the shutdown signal if the over-temperature condition has ended.

The term "about," as used herein, should generally be understood to refer to both numbers in a range of numerals. Moreover, all numerical ranges herein should be understood to include each whole integer within the range.

Although preferred embodiments of the invention have been illustrated in the accompanying drawings and described in the foregoing Detailed Description, it will be understood that the invention is not limited to the embodiments disclosed but is capable of numerous rearrangements and modifications of parts and elements without departing from the spirit and scope of the invention or the equivalent(s) of various features described herein. It will be understood that the chemical and/or mechanical details of every design may be slightly different or modified by one of ordinary skill in the art without departing from the teachings of the present invention. Thus, the present invention is not intended to be limited to the embodiments described and illustrated herein, but is to be accorded the broadest scope consistent with the teachings of the invention set forth herein.

## Claims

1. An electric motor linear speed controller, comprising:
a digital to analog converter means for converting an 8-bit digital signal to an analog voltage for setting voltage across a motor;
a digital state machine means for converting the duty cycle of an input signal for output to the digital to analog converter means; and
a closed loop feedback loop means for monitoring and setting the voltage across the motor.

2. The controller according to claim 1, further comprising an over-current sense circuit for monitoring the current across the electric motor.

3. The controller according to claim 1, further comprising an over/under voltage sense circuit for monitoring a supply voltage to the electric controller.

4. A circuit arrangement in a variable speed electric motor controller, comprising:
a controller logic circuit for operating a controller logic finite state machine, wherein the state machine sets the voltage supplied to an electric motor; and
a closed loop feedback for generating a signal indicating the voltage across the electric motor, the signal being input to the state machine for monitoring thereof.

5. The circuit arrangement of claim 4, wherein the state machine comprises at least a running state.

6. The circuit arrangement of claim 4, wherein the controller logic circuit comprises a microprocessor and a memory, each configured for collectively controlling the state machine.

7. The circuit arrangement of claim 4, additionally comprising a digital to analog converter for converting an 8-bit digital signal to an analog voltage for setting the voltage supplied to the electric motor.

8. The electric motor linear speed controller of claim 1, which further comprises:
an over-current sense circuit to monitor the current across or through the electric motor;
an over/under voltage sense circuit to monitor a supply voltage to the electric controller;
a locked rotor protecting circuit to protect the electric motor from a locked rotor fault condition based on a commutating pulse noise signal obtained from the voltage across the motor;
a multi-level current limiting circuit using at least one current threshold to inhibit or prevent short circuits;
a thermal sensing circuit to protect the controller from over-heating damage;
means for protecting the controller from damage by reversed polarity of a power supply; and
means for protecting the controller from electrostatic discharge and bulk current injection damage, wherein the closed loop feedback means generates a signal for input to the digital state machine and the linear speed controller is configured and adapted for operation in connection with an automotive electric motor.

9. An automobile comprising the electric motor linear speed controller of claim 8.

10. An automobile comprising the electric motor linear speed controller of claim 8, wherein the controller forms a portion of a temperature-control system.

11. A system for protecting an electric motor comprising a linear speed control generating a speed control signal, the system comprising:
means for detecting a locked rotor condition of the electric motor;
means for generating a locked rotor signal;
means for disconnecting the electric motor based on the locked rotor signal; and
means for restarting the electric motor through turning on and off of the speed control signal.

12. The system of claim 11, further comprising:
means for sensing a locked rotor current;
means for comparing the locked rotor current with a predetermined threshold; and
means for limiting the locked rotor current based on the comparison.

13. A system for detecting a locked rotor condition in an electric motor, comprising a linear speed control having an input control signal, the system comprising:
means for obtaining a signal consisting of pulses from the motor;
means for filtering the signal thereby removing noise and amplifying the pulses;
means for selecting pulses with an amplitude greater than a predetermined minimum amplitude;
means for detecting whether the motor is moving based on the signal, thereby generating a logic signal; and
means for combining the logic signal with the input control signal of the motor to obtain a locked rotor condition signal.

14. A linear electric motor controller system with linear power mode, comprising:
a direct current electric motor;
a controller operatively coupled to the motor for controlling voltage across the motor, the controller including an application specific integrated circuit (ASIC); wherein the integrated circuit is coupled to a setting input signal port for generating predetermined motor selection speeds; and
an adjustable electronic resistor combined with an electronic switch device.

15. The system of claim 14, wherein the integrated circuit provides linear control of motor speed through the use of a voltage feedback loop across motor connections.

16. A linear power module protecting system, comprising:
an electric motor;
an application specific integrated circuit operatively coupled to the motor;
a power MOSFET utilized as a variable resistor with switch function, the MOSFET's parasitic body diode providing an opposite current path in response to reversed polarity applied to the MOSFET, thereby protecting the power MOSFET, the MOSFET having a breakdown voltage;
a zener diode for clamping the voltage across the MOSFET, the zener diode having a breakdown voltage;
a diode coupled in series to said zener diode for providing electric isolation between gate and drain of said MOSFET;
a resistor coupled to the power transistor for limiting the current through the zener diode and the first diode; and
a combined input diodes set for restricting the direction of current flow to the integrated circuit and clamping the reversed voltage across an ASIC power supply, the combined input diodes having a breakdown voltage.

17. A system for reducing thermal impedance in an electronic power switch of an electric motor linear speed control system, comprising:
an electric motor;
at least two temperature FETs coupled in parallel for controlling the power of the motor;
an integrated circuit for controlling the at least two parallel temperature FETs; and
each temperature FET having its drive voltage offset by the integrated circuit to track temperature of another temperature FET.

18. An apparatus for protecting against a locked rotor condition in an HVAC system, comprising:
a temperature FET circuit including a FET, and a pair of temperature sensitive diodes disposed over the junction of the FET, thereby keeping temperature of the diodes consistent with the FET;
a direct current electric motor; and
an integrated circuit, including a temperature comparator block, a current source block, a timer block with an external time-setting capacitor, and a FET drive block.

19. An electronic controller module comprising:
an electronic controller that generates at least about 15 W of heat;
an enclosure made of at least one heat-resistant material configured and dimensioned to substantially surround and physically protect the controller;
at least one electrically-conductive member to provide input or output of at least one electrical signal through the enclosure to the controller; and
a heat sink operatively associated with the controller to receive heat therefrom, the heat sink being configured and dimensioned to dissipate a sufficient amount of heat to inhibit or avoid damage to the controller and enclosure.

20. The module of claim 19, wherein the enclosure includes a lid which comprises the heat-resistant material and the heat sink, which comprises a heat fin assembly mounted upon the lid and that extends away therefrom.

21. The module of claim 19, wherein a portion of the heat sink extends through the lid to a position adjacent the controller.

22. The module of any one of claims 19-21, wherein the heat sink is made of a material that dissipates about 20 W to 150 W and the heat-resistant material comprises an olefinic polymer that includes amide units and that does not melt on exposure to about 150 W.

23. The module of claim 22, wherein the heat sink material comprises aluminum, copper, a thermally conductive plastic, or a combination thereof, and the olefinic polymer comprises a polyamide-polypropylene copolymer and a filler component in an amount sufficient to increase the heat-resistance thereof.

24. The module of claim 19, wherein the electronic controller is a linear controller capable of facilitating temperature control in an environment.

25. The module of claim 19, wherein the enclosure is at least substantially rectangular having dimensions of about 3 cm to 8 cm in length, about 1 cm to 4 cm in height, and about 3 cm to 6 cm in width and wherein the heat sink comprises at least two short fins having a length of about 0.25 cm to 1 cm and at least two long fins having a length of about 1.5 cm to 6 cm, each adjacent the enclosure at one end thereof and extending away therefrom.

26. The module of claim 19, further comprising an electrically insulating but thermally conductive member between the controller and the lid and in contact therewith to inhibit or avoid degradation of the controller, wherein the electrically insulating but thermally conductive member comprises at least one silicone material that is sufficiently flexible to at least partially conform to the controller.
